# EUROPEAN PATENT APPLICATION

(11) **EP 1 138 635 A1**
(43) Date of publication of application: **04.10.2001**
(21) Application number: 00909737.9
(22) Date of filing: 17.03.2000
(51) Int. Cl.: C02F 1/30, C02F 1/461, C02F 1/48, B03C 1/00, B03C 5/00

(54) **LIQUID TREATING METHOD AND LIQUID TREATING SYSTEM**

(30) Priority: 19.03.1999 JP 7697699
(71) Applicant: Proudo Co., Ltd., Shimonoseki-shi, Yamaguchi 751-0834 (JP)
(72) Inventor: MORI, Toshikazu Proudo Co., Ltd., Shimonoseki-shi Yamaguchi 751-0834 (JP); TSUDA, Mitsuo Proudo Co., Ltd., Shimonoseki-shi Yamaguchi 751-0834 (JP)
(74) Representative: Cooper, John
(86) International application number: JP0001676
(87) International publication number: WO0056663

(57) **Abstract**

It is an object of the present invention to reliably and safely purify waste liquids and urine discharged by industry, agriculture and livestock farms by a simple and low cost process. According to the invention, therefore, by accomplishing mixing treatment of liquids such as waste liquids in a magnetic field, it is possible to fragment liquid molecules and colloidal particles and surround them with charges while flocculating the colloidal particles together, to rapidly separate the flocculated particles from the liquid molecules by a mesh-like member to which a voltage is applied, and to more minutely charge the liquid molecules and colloidal particles by application of an AC high voltage, so that emission of a high frequency electromagnetic wave can completely separate the flocculated particles and the liquid molecules, thereby producing an activated liquid.

## Description

### Field of the Invention

The present invention relates to a liquid treating process and a liquid treating system, and particularly, to a liquid treating process and a liquid treating system which are suitable for purifying not only waters in a river, a lake and a marsh, but also a high-concentration drainage such as a stock farming drainage, and another liquid containing water-soluble organic substances and micro-organisms.

### Background of the Invention

There are conventionally proposed processes and systems for purifying a stock farming drainage containing feces and urine of cattle, pig and the like, or an industrial drainage containing chemical substances such as a detergent and an industrial waste liquid.

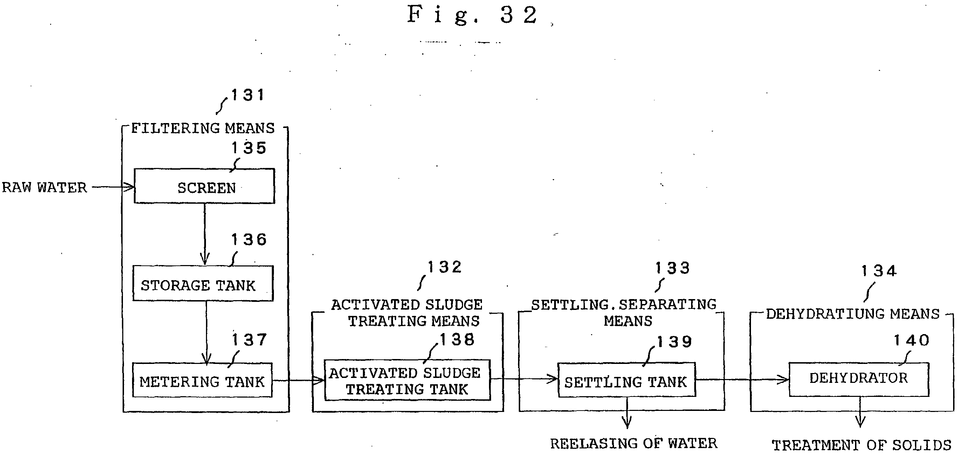

Such a conventional liquid treating system will be described below with the treatment of a pig-culture drainage taken as an example. As shown in Fig.32, the conventional water treating system for treating the pig-culture drainage comprises a filtering means 131 for removing suspended solids by passing a raw water through a screen 135 or the like, a activated-sludge treating means 132 for decomposing water-soluble organic substances by aerobic bacteria, a settling/separating means 133 for settling the water-soluble organic substances separated from the raw water by the decomposition to separate the water and a sediment from each other, and a dehydrating means 134 for removing water from the sediment.

These treating means will be described below in detail. In the filtering means 131, the suspended solids are caught by the screen 135 during passage of the raw water containing the suspended solids such as feces and urine through the screen 135. The raw water depleted of the suspended solids is once stored in a storage tank and then transferred to a metering tank 137, from which an amount of the water capable of being treated by an activated sludge is allowed to flow into an activated-sludge treating tank 138 as the activated-sludge treating means 132. In the activated-sludge treating tank 138, aerobic bacteria decompose the water-soluble organic substances such as nitrogen compounds contained in the raw water. The raw water subjected to the decomposition by the bacteria in this treating means is fed to a settling tank 139 as the settling-separating means 133, where the water-soluble organic substances and the like are settled to the bottom of the settling tank 139 and separated from the water. The resulting water is disinfected and then discharged to a river or the like, and the sediment is transported to the dehydrating means 134, where the sewage is dehydrated into a solid by a dehydrator 140 and then discharged.

In the conventional water treating system, a washing water from the dehydrator 140 is permitted to flow into the storage tank 136 in order to avoid increases in building site and cost due to an increase in size of the activated-sludge treating tank 138.

It is that because the so-called high-concentration raw water having a high organic substance load is diluted by the washing water from the dehydrator 140, the burden of the aerobic bacteria for decomposing the organic substances in the activated-sludge treating means 132 is alleviated.

However, the conventional water treating system suffers from the following problem: The high-concentration raw water cannot be diluted sufficiently by only the washing water from the dehydrator 140, and a more amount of water is required. If the amount of water diluting the raw water is increased, the amount of water to be purified is also increased. As a result, the size of the water treating equipment is increased, thereby causing increases in initial cost such as building cost, and in running cost such as consumed electric power and city water charges for treating the liquid.

In addition, when a high-concentration sewage is purified biologically, it is difficult to conduct the maintenance and management, and if the treating system is once fallen into disorder, several months are required for the recovery. During this period, the water purified incompletely is discharged into a river, resulting in a possibility that an environment pollution problem is arisen.

To solve such problem, a treating process has been proposed which comprises chemically flocculating and separating high-molecular organic substances in water using a chemical agent such as a high-molecular flocculating agent or the like to reduce the concentration. However, this process suffers from a problem that it is delicate to set the type of the chemical agent and the amount of chemical thrown relative to the concentration of the organic substances, and it is difficult to change the type and the amount in accordance with a variation in concentration. Another problem is that if the remaining agent is incorporated into the activated-sludge treating tank, the microorganisms cannot be decomposed effectively and may be died out.

Further, there is a proposed process which involves decomposing organic substances using anaerobic microorganisms in place of the aerobic microorganism. However, this process suffers from a problem that raw water must be stored for a long period in a large-sized tank and for this reason, a very wide site is required, and an odor measure must be taken.

### Summary of the Invention

The present invention has been accomplished with such problems in view, and it is an object of the present invention to provide a liquid treating process and a liquid treating system, wherein the size of the liquid treating equipment can be reduced to reduce the initial cost and the running cost, and water-soluble organic substances, microorganisms and the like in a liquid can be reliably removed by a simple operation, and moreover, the deodorizing, decolorizing, sterilizing, disintegrating, and oxidizing and reducing treatments of the liquid can be carried out.

To achieve the object stated above, the liquid treating process of the present invention comprises mixing a liquid containing colloidal particles of water-soluble organic matter, microorganisms and the like in a magnetic field, passing the mixed liquid through a mesh-like material to which a voltage has been applied, and then applying an AC high voltage to the liquid while emitting a high-frequency electromagnetic wave. The mixing in the magnetic field fragments the liquid molecules and colloidal particles to surround them with charges and flocculate the colloidal particles together, while the voltage-applied mesh-like material allows reliable and rapid separation of the flocculated particles from the liquid molecules, application of the AC high voltage electrically charges the liquid molecules and colloidal particles in a more minute state, and emission of the high-frequency electromagnetic wave completely separates the flocculated particles from the liquid molecules, thus allowing an activated liquid to be produced.

According to another aspect, the liquid treating process of the invention comprises emitting an electromagnetic microwave to the liquid after it has been treated by the aforementioned liquid treating process, and further emitting a low frequency ultrasonic wave while emitting a high-frequency electromagnetic ultrasonic wave.

The term "electromagnetic ultrasonic wave" used herein is defined to represent a wave made by synthesis of a magnetic flux generated by a permanent magnet or an electromagnet with an ultrasonic wave generated by a ultrasonic wave generator. The term "colloidal particles" used herein is defined to represent fine particles of water-soluble organic substances dispersed in the liquid, and particles of substances other than the liquid molecules such as microorganisms and fine algae. The particles are in stable hydrated states or in metastable hydrophobic colloidal states in the liquid.

According to the invention, if the liquid is very dirty, the degree of the dirty liquid is reduced by the previous liquid treating process so the liquid can be certainly purified by the next liquid treating process. Moreover, the electric field formed by the microwave renders hydrophobic the colloidal particles in stable hydrated states or in metastable hydrophobic colloidal states in the liquid to separate them from the liquid molecules. The ultrasonic wave in the low frequency range causes the separated colloidal particles to collide against one another by a cavitation effect, thereby flocculating the colloidal particles, and the electromagnetic ultrasonic wave in the high frequency range deodorizes the liquid. Therefore, it is possible to easily and reliably remove the colloidal particles dissolved in the liquid and to deodorize the liquid without need for a large-scaled equipment.

According to yet another aspect, the liquid treating system of the invention comprises magnetic mixing means by which a liquid containing colloidal particles is mixed in a magnetic field, electrical separating means by which the liquid containing the flocculated colloidal particles is passed through a mesh-like material to which a voltage has been applied and the flocculated particles are electrically adsorbed onto it to separate them from the liquid molecules, AC high voltage applying means by which an AC high voltage is applied to the liquid, and high-frequency electromagnetic wave emitting means by which a high-frequency electromagnetic wave is emitted to the liquid. The magnetic mixing means fragments the liquid molecules and colloidal particles to electrically charge them and flocculate the colloidal particles together, the electrical separating means reliably and rapidly separates the flocculated particles from the liquid molecules, the AC high voltage applying means electrically charges the liquid molecules and colloidal particles in a finer state, and the high-frequency electromagnetic wave emitting means completely separates the flocculated particles from the liquid molecules, thus allowing an activated liquid to be produced.

According to yet another aspect, the liquid treating system of the invention comprises the aforementioned liquid treating system as a pretreating system while also comprising separating treatment means by which an electromagnetic microwave is emitted to the liquid treated by the pretreating system to separate the colloidal particles and the liquid molecules, flocculating treatment means by which a low frequency ultrasonic wave is emitted to the liquid after separation of the colloidal particles to flocculate the colloidal particles, and deodorizing treatment means by which a high-frequency electromagnetic ultrasonic wave is emitted to the liquid to deodorize the liquid. Thus, even in cases of very highly polluted liquids, the degree of pollution is lessened beforehand by the pretreating system, so that the burden on the subsequent treating systems is alleviated to allow more reliable purification of the liquids. In addition, the colloidal particles in a hydrated stable state or in a hydrophobic colloidal metastable state in the liquid are rendered hydrophobic by the electric field generated by the microwave emitted from the separating treatment means and are thus separated from the liquid molecules, such that the colloidal particles separated by the cavitation effect of the ultrasonic wave emitted from the flocculating treatment means collide against one another and flocculate, while the liquid is deodorized by the high-frequency electromagnetic ultrasonic wave emitted from the deodorization treatment means. It is therefore possible to reduce the scale of the liquid treating system and lower the initial costs and running costs, and to accomplish reliable removal of colloidal particles in the liquid as well as deodorization.

According to yet another aspect, the liquid treating system of the invention comprises high-voltage pulse treatment means by which a high-voltage pulse is applied to the pretreated liquid to separate and remove nitrogen from the liquid while generating ozone for decoloration and sterilization of the liquid, and flocculated particle discharging treatment means by which the flocculated colloidal particles are adsorbed by magnetic force and discharged. The electric field of the high-voltage pulse applied by the high-voltage pulse treatment means therefore accelerates the separating and flocculating treatment of the colloidal particles, while the nitrogen in the liquid can be separated and removed and ozone generated with a simple apparatus, to thus facilitate decoloration and sterilization of the liquid.

According to yet another aspect, the liquid treating system of the invention comprises a primary flocculating device provided with magnetic mixing means by which a liquid containing colloidal particles is mixed in a magnetic field to fragment the liquid molecules and colloidal particles and shower them with a charge while flocculating the colloidal particles together; an electrical charging rapid separation device provided with electrical separating means by which the liquid containing the flocculated colloidal particles is passed through a mesh-like material to which a voltage has been applied and the flocculated particles are electrically adsorbed onto it to separate them from the liquid molecules; an activated water-producing device provided with AC high voltage applying means by which an AC high voltage is applied to the liquid to electrically charge the liquid and with high-frequency electromagnetic wave emitting means by which an electromagnetic wave of 250 MHz to 300 MHz is emitted to the liquid so that induction plasma is emitted by the high-frequency electric field to completely separate the colloidal particles from the liquid molecules; a flocculating device having electrically charging means/cell disrupting treatment means provided with AC high voltage electrodes by which a high-frequency, high-voltage pulse is applied to separate and flocculate the colloidal particles from the liquid while disrupting the cells; a flocculation accelerating device provided with microwave separating treatment means by which an electromagnetic microwave is emitted to the liquid to separate the colloidal particles and the liquid molecules, first ultrasonic wave flocculating treatment means by which an ultrasonic wave with a frequency of 40 kHz to 1200 kHz is emitted to the liquid after emission of the microwave, to flocculate the colloidal particles, and deodorizing treatment means by which a high-frequency electromagnetic ultrasonic wave is emitted to the liquid; and a settling device provided with flocculated particle settling treatment means by which the liquid containing the flocculated colloidal particles is passed through a lattice-shaped electrical separating membrane to which a high voltage has been applied to adsorb the flocculated particles onto the electrical separating membrane, while the direction of high voltage application is switched to settle the flocculated particles. Thus, since the primary flocculating device, electrical charging rapid separation device and activated water producing device allow pretreatment of the liquid, it is possible to alleviate the burden of liquid treatment on the subsequent devices to allow more reliable and efficient purification of the liquids, even in cases of highly polluted liquids. Moreover, because the electric field generated by the high-frequency, high-voltage pulse in the flocculating device causes electrical charging of the colloidal particles in the liquid, it is possible to disrupt the hydrated stable state and the hydrophilic colloidal metastable state of the colloidal particles to render them hydrophobic and flocculate them, while also disrupting and killing microorganic cells such as water bloom and colon bacillus. In addition, the microwave and ultrasonic wave in the flocculation accelerating device accelerate separation and flocculation of the colloidal particles. The liquid can also be deodorized and decolored in the flocculating device, while the electromagnetic ultrasonic wave of the flocculation accelerating device decomposes mainly the amino acids of the colloidal particles to accomplish deodorization of the colloidal particles themselves, thus allowing complete elimination of odors in the liquid. Furthermore, the high voltage-applied electrical separating membrane of the flocculated particle settling treatment means reliably separates the flocculated colloidal particles while the voltage switching allows the flocculated particles to be more rapidly settled.

### Brief Description Of The Drawings

Fig.1 is a flow diagram showing a first embodiment of a liquid treating system according to the present invention;
Fig.2 is a plan view showing essential portions of the first embodiment of the liquid treating system according to the present invention;
Fig.3 is a sectional view taken along a line I-I in Fig.2;
Fig.4 is a view taken along a line II-II in Fig.2;
Fig.5 is a view taken along a line III-III in Fig.2;
Fig. 6 is a sectional view taken along a line IV-IV in Fig.2;
Fig.7 is a diagrammatic illustration showing a first separating means and a first flocculating means in the first embodiment of the liquid treating system according to the present invention;
Fig.8 is a diagram showing essential portions of a disintegrating/electrically charging means in the first embodiment and a second embodiment;
Fig.9 is a diagram showing essential portions of a deodorizing means in the first and second embodiments;
Fig.10 is an illustration showing a high-voltage pulse treating means in the first embodiment of the liquid treating system according to the present invention;
Fig.11 is an illustration showing a pattern of voltage applied in the high-voltage pulse treating means in the first embodiment;
Fig.12 is an illustration showing another pattern of voltage applied in the high-voltage pulse treating means in the first embodiment;
Fig.13 is an illustration showing states of molecules in water treated by the high-voltage pulse treating means in the first embodiment;
Fig.14 is a block diagram showing a centralized control means in the first embodiment;
Fig.15 is a flow diagram showing the second embodiment of a liquid treating system according to the present invention;
Fig.16 is a front view showing essential portions of the second embodiment of the liquid treating system according to the present invention;
Fig. 17 is a plan view showing the essential portions shown in Fig.16;
Fig.18 is a left side view showing the essential portions shown in Fig.16;
Fig. 19 is a right side view showing the essential portions shown in Fig.16;
Fig.20 is a back view showing the essential portions shown in Fig.16;
Fig.21 is an illustration showing a mechanism of separation and flocculation of colloidal particles by a flocculating device and a flocculation accelerating device in the second embodiment;
Fig.22 is a chemical formula showing the generation of OH radical by the treatments in the flocculating device and a flocculation accelerating device in the second embodiment;
Fig.23 is an illustration showing essential portions of first and second settling devices in the second embodiment;
Fig.24 is an illustration of an electrically separating membrane in the first and second settling devices in the second embodiment;
Fig.25 is a block diagram showing a centralized control unit in the second embodiment;
Fig.26 is a table showing results of a demonstrating test on the treatment of a pig-culture drainage in the second embodiment, e.g., the amount of water-soluble organic substances in a raw water, in a water at an inlet of the flocculating device and in a water at an outlet of the second settling device;
Fig.27 is a table showing the results of the third run of the demonstrating test on the treatment of the pig-culture drainage in the second embodiment, e.g., the amount of water-soluble organic substances in the water at each of the outlets of the devices;
Fig. 28 is a plan view showing the essential portions of a first example of the third embodiment of a liquid treating system according to the invention;
Fig. 29 is a left side view of Fig. 28, showing the pretreating system of the third embodiment of a liquid treating system;
Fig. 30 is a block diagram showing an example of a centralized control device of the third embodiment of the liquid treating system, wherein a pretreating system is added to the liquid treating system of the first embodiment;
Fig. 31 is a block diagram showing an example of a centralized control device of the third embodiment of the liquid treating system, wherein a pretreating system is added to the liquid treating system of the second embodiment; and
Fig.32 is a flow diagram showing a prior art water treating system.

### Detailed Description of the Preferred Embodiment

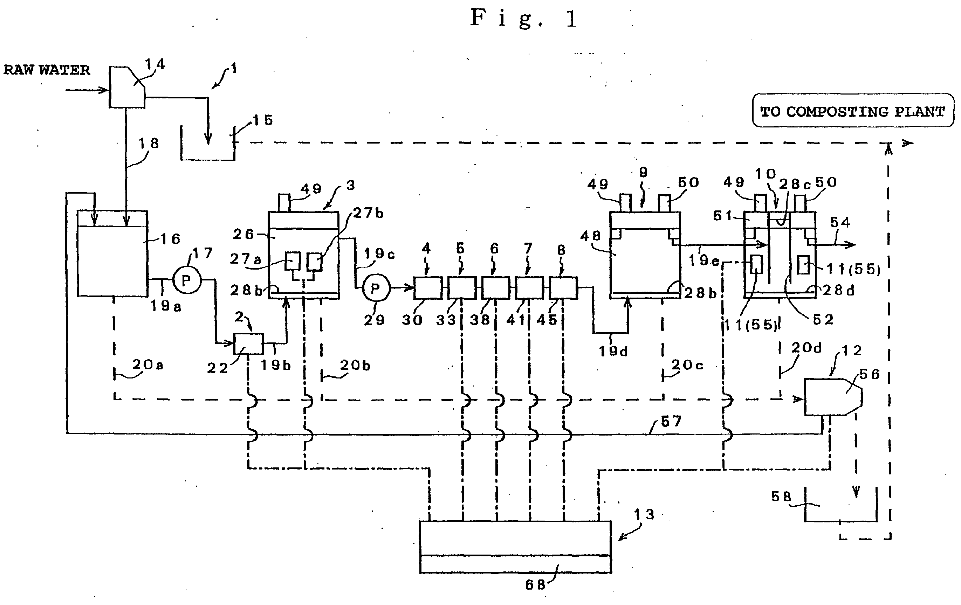

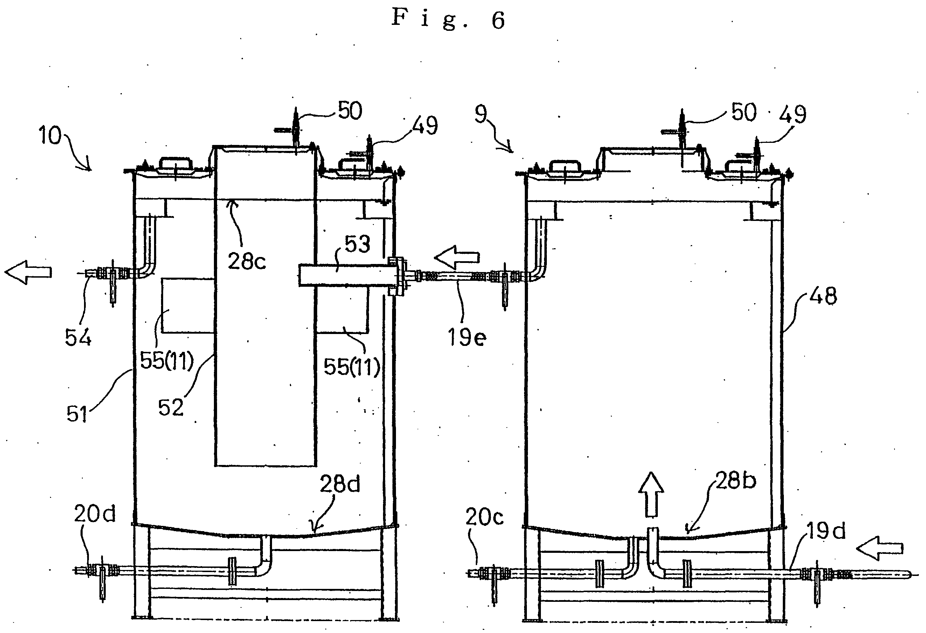

The present invention will now be described by way of a first embodiment with reference to Figs.1 to 14.

The present invention can be utilized for purification of not only service water in a pool or the like, but also various liquids, e.g., a drainage from the stock farming such as culture of pig, cattle and the like, an industrial drainage such as a waste liquid from a factory, and a waste oil. For convenience, the water purifying system for a pig-culture drainage or an industrial drainage will be described as one example.

Fig.1 shows a first embodiment of the liquid treating system according to the present invention. The first embodiment comprises a filtering means 1 for removing suspended solids having a large specific gravity from a raw water including urine of a pig by a screen or the like, a first separating means 2 adapted to emit a microwave which is an electromagnetic wave to the raw water which is still muddy after being filtered, thereby separating colloidal particles and water molecules from each other by an electric field generated by the microwave, a first flocculating means 3 for flocculating the colloidal particles by emitting an ultrasonic wave in a low frequency range to the raw water subjected to the separation, a disintegrating/electrically charging means 4 for electrically charging the liquid to bring the water molecules and the colloidal particles into a regularly ordered arrangement, while disintegrating the water molecules and the colloidal particles in the raw water by the mixing of the water, a second separating means 5 adapted to emit the microwave which is the electromagnetic wave, again to the water containing the water molecules and the colloidal particles disintegrated and brought into the regularly ordered arrangement, thereby separating the fine colloidal particles and the water molecules from each other, a deodorizing means 6 adapted to emit an electromagnetic ultrasonic wave in a high frequency range to the water subjected to the separating treatment to remove an offensive odor from the subject water (which means a water to be treated, hereinafter), a second flocculating means 7 adapted to emit a ultrasonic wave in a low frequency range to the water subjected to the deodorizing treatment to flocculate the colloidal particles and to disperse the resulting flocculates from the water molecules, a high-voltage pulse treating means 8 for applying a high-voltage pulse to the subject water to separate off nitrogen compounds from the subject water and to deodorize and sterilize the subject water by producing ozone, a flocculate discharging means 9 adapted to attract and settle the flocculates including metal substances such as heavy metal of the colloidal particles by a magnetic force to discharge them, a water molecule disintegrating means 10 for further disintegrating the water molecules also called a cluster by the action of the magnetic field to produce an activated water, an oxidizing/reducing means 11 for subjecting the subject water ionized by the electrically charging treatment to an oxidizing/reducing reaction to restore the water to a stable state, a dehydrating means 12 for dehydrating the sediments comprising the colloidal particles, and a centralized control means 13 connected to the above-described treating means for controlling the operations of the treating means.

Above each means will be described in detail.

The filtering means 1 is comprised of a filtering element 14 such as a screen or a filter for filtering the raw water, a feces-dregs receiving section 15 for discharging suspended solids filtered off, and a raw water tank 16 for storing the filtered raw water, as shown in Fig.1.

The filtering means 1 is adapted to filter off the suspended solids separated from the water and floating in the raw water to discharge the floating solids to the feces-dregs receiving section 15. The raw water filtered by the filtering element 14 is once stored in the raw water tank 16 and then transported to the first separating means 2 for a subsequent treating stage by a raw water feeding pump 17. For this purpose, a flow-in pipe 18 is connected to an upper portion of the raw water tank 16 for permitting the filtered raw water to flow into the raw water tank 16, and a first transporting pipe 19a is connected to a lower portion of a side of the raw water tank 16 for permitting the raw water to be transported to the subsequent treating stage by an suction force of the raw water feeding pump 17.

A first discharge pipe 20a for discharging the sediments is connected to a bottom of the raw water tank 16, so that the sediments are transported through the first discharge pipe 20a to the hydrating means 12.

The water resulting from the dehydration of the sediments by a dehydrator 56 (which will be described hereinafter) of the dehydrating means 12 and the water which has washed the dehydrator 56 are permitted to flow into the raw water tank 16 and utilized to dilute the raw water.

The first separating means 2 will be described below.

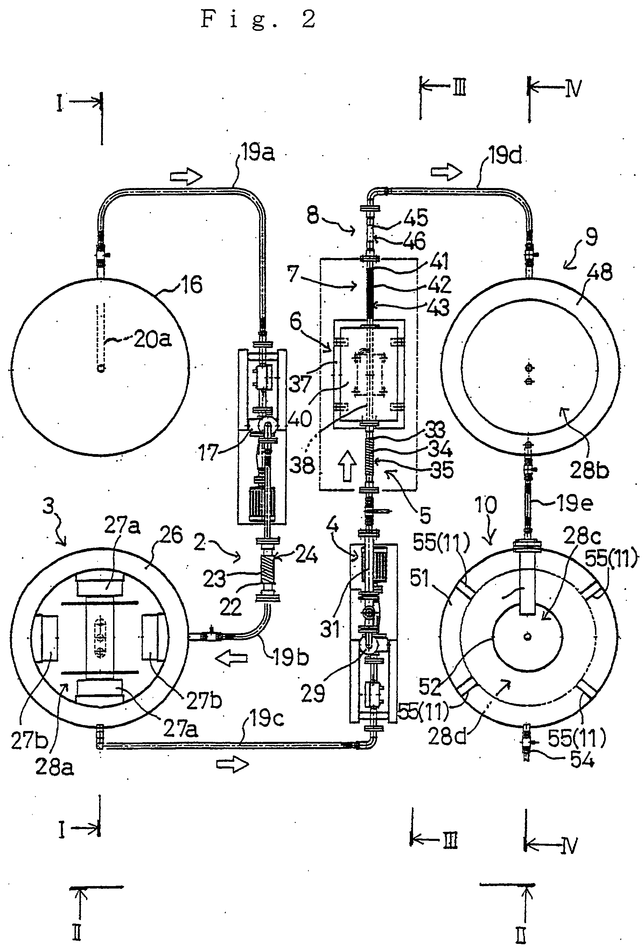

A first separating pipe 22 is disposed in the first separating means 2 and connected to the first transporting pipe 19a, as shown in Figs.1 and 2. An electromagnetic coil 23 is wound around an outer periphery of the first separating pipe 22, and a circular pipe-shaped first microwave generator 24 is disposed on the outer periphery of the first separating pipe 22. The first microwave generator 24 is comprised of a magnet formed of a neodymium plate or the like, and has an upper portion acting as an N pole and a lower portion acting as an S pole. A microwave having a frequency in a range of 300 MHz to 16 GHz, more preferably in a range of 2.4 GHz to 10.5 GHz from the viewpoint of the separation of the colloidal particles and further preferably a frequency of 10.5 GHz, is generated from the first microwave generator 24. A composite field comprising a magnetic field and an electric field is formed by the microwave which is an electromagnetic wave generated by such permanent magnet or electromagnet, thereby separating the colloidal particles and the water molecules in the raw water from each other.

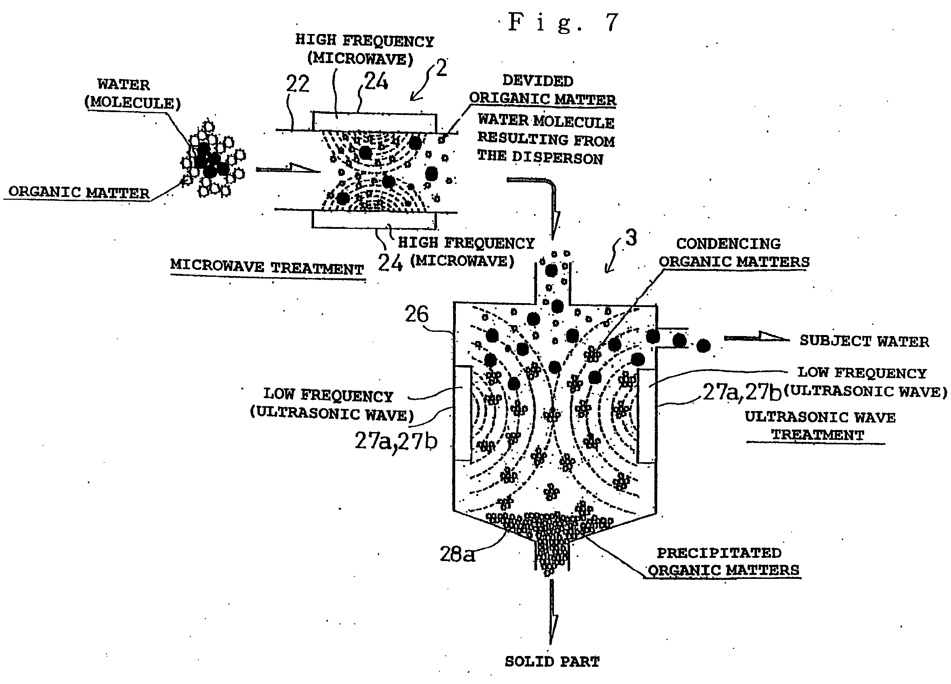

It is believed that the microwave has mainly an effect of subjecting the raw water to the disintegrating treatment to electrically charge the colloidal particles and the water molecules to disperse them sporadically in the raw water, as shown in Fig.7. Specifically, the microwave energy absorbed in the treated water resonates at the frequency of the molecular rotation of the water thus exciting the molecular rotation of the water, while different frequencies resonate at the frequency of the molecular rotation of other dissolved components causing them to rotate at a different frequency than the water molecules . When this rotational energy becomes sufficiently large, the molecules of water and the dissolved components move in separate directions and are separated. The electrons in the water molecules are ionized at this time.

The water resulting from the dispersion is transported through a second transporting pipe 19b connected to the first separating pipe 22 to the first flocculating means 3.

The first flocculating means 3 will be described below.

As shown in Figs.1 to 3A, a first flocculating tank 26 is disposed in the flocculating means 3, and the second transporting pipe 19b is connected to a bottom of the first flocculating tank 26, so that the subject water flows from the first separating pipe 22 into the second transporting pipe 19b.

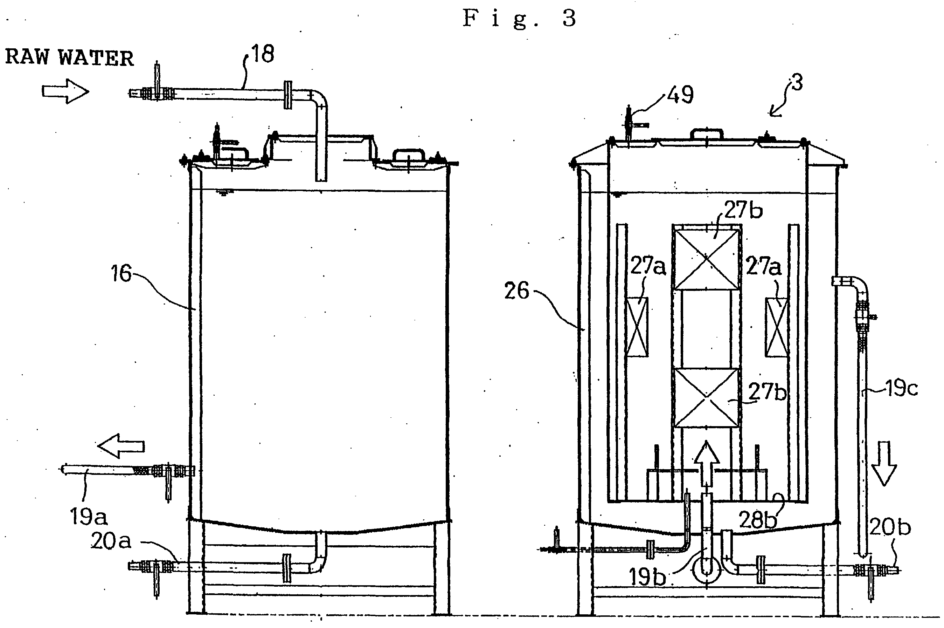

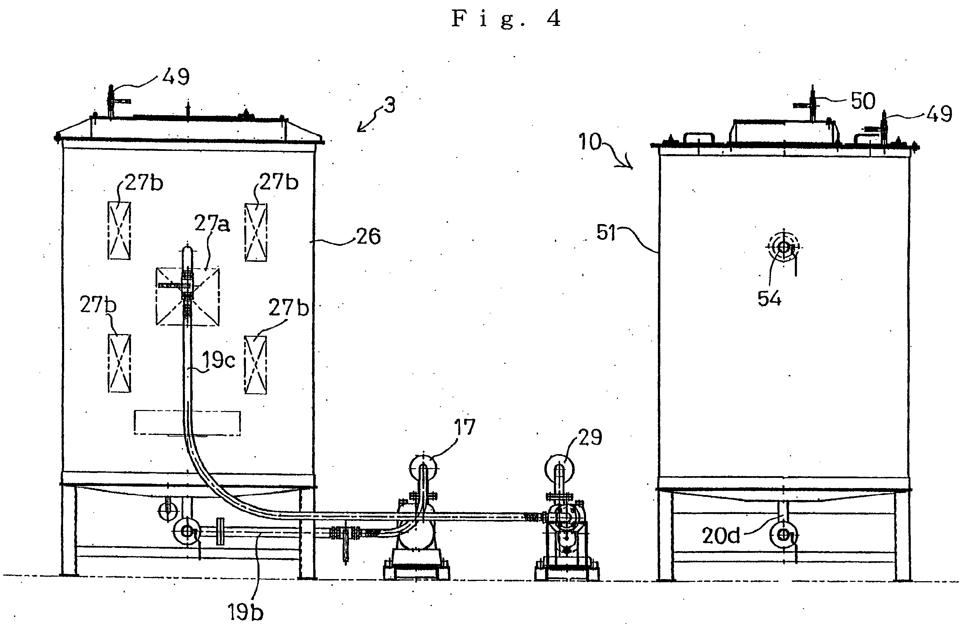

A plurality of first low-frequency range ultrasonic generators 27 are disposed in the first flocculating tank 26 for generating a ultrasonic wave of a low frequency equal to or lower than 100 kHz depending on the concentration of the raw water, as shown in Figs.3 and 4. In the first embodiment, the first low-frequency range ultrasonic generator 27 is comprised of a first low-frequency range ultrasonic generator portion 27a for generating an ultrasonic wave having a frequency of 28 kHz or 40 kHz as a lateral wave, and a first low-frequency range ultrasonic generator portion 27b for generating an ultrasonic wave having a frequency of 48 kHz or 100 kHz as a lateral wave. Under a cavitation effect or the like provided by these ultrasonic waves, the ultrasonic wave having the low frequency of 28 kHz or 40 kHz has a role of flocculating the dispersed colloidal particles, and the ultrasonic wave having the low frequency of 48 kHz or 100 kHz has a role of dispersing the flocculated particles and the water molecules. Outputs of the ultrasonic waves provide energy in a range of 300 W to 1.2 kW.

Permanent magnets 28a of neodymium or the like are laid on an inner surface of the bottom of the first flocculating tank 26, and a second discharge pipe 20b is connected to the outside of bottom of the first flocculating tank 26. Therefore, the flocculates of the colloidal particles in electrically charged states are attracted to the permanent magnets 28a and settled on the bottom. The resulting sediments are transported through the second discharge pipe 20b to the dehydrating means 12.

The water subjected to the first-stage flocculating treatment is transported through a third transporting pipe 19c connected to an upper portion of a side of the first flocculating tank 26 to the disintegrating/electrically charging means 4. A pressurizing pump 29 is disposed in the middle of the third transporting pipe 19c, so that the subject water is allowed to flow under an excessively high pressure into the disintegrating/electrically charging means 4.

An air exhaust port 49 for discharging air contained in the raw water is disposed in the upper portion of the first flocculating tank 26.

The disintegrating/electrically charging means 4 will be described below.

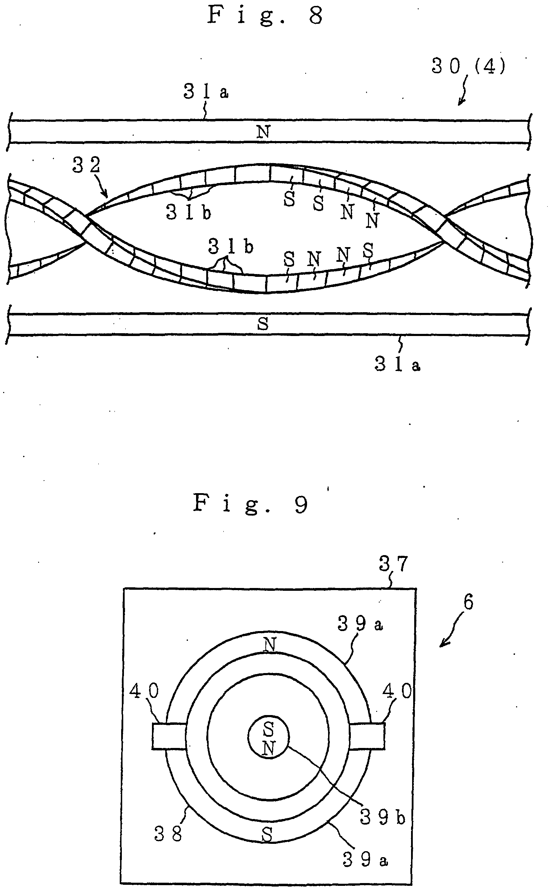

A disintegrating/electrically charging pipe 30 such as a mixing pipe is disposed in the disintegrating/electrically charging means 4 and connected to the third transporting pipe 19c. As shown in Fig.8, neodymium plates 31a of about 10,000 Gauss are disposed on upper and lower portions of the disintegrating/electrically charging pipe 30, and neodymium element blades 32 each made of a ceramic material and having neodymium elements 31b embedded therein and having a magnetic force of about 11,000 Gauss are disposed within the disintegrating/electrically charging pipe 30. Each of the neodymium element blades 32 is formed from a spirally twisted flat plate and has the neodymium elements 31b of N and S polarities embedded alternately, for example, in an order of "NNSSNNSS (((" in a widthwise end of the blade 32 in a direction of passage of the subject water, as shown in Fig.8. Thus, the magnetic field generated by the neodymium plates 31a, the electric field caused by movement of the treated water in the pipe and the mixing action of the neodymium element blades 32 ensure that the water molecules in the subject water less than 10³ *µ*m are disintegrated and charged with negative electricity, and at the same time, the colloidal particles are disintegrated and charged with positive electricity and ionized severally and brought into the ordered arrangement. Therefore, in the disintegrating/electrically charging means 4, the finer colloidal particles, which have been completely not removed at the first flocculating/separating stage, can be easily treated at the subsequent second flocculating/separating stage by attracting the molecules having the same potential strongly.

The neodymium plates 31a disposed on the upper and lower portions of the disintegrating/electrically charging pipe 30 may be formed of a magnet.

The second separating means 5 will be described below.

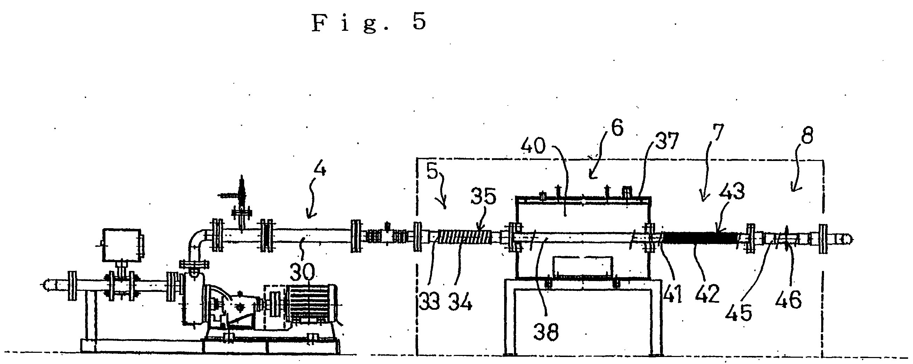

The second separating means 5 has an arrangement substantially similar to that of the first separating means 2. More specifically, a second separating pipe 33 is disposed in the second separating means 5 and connected to the disintegrating/electrically charging pipe 30, as shown in Figs.2 and 5. An electromagnetic coil 34 is wound around an outer periphery of the second separating pipe 33, and a second microwave generator 35 is disposed on the outer periphery of the second separating pipe 33. The second microwave generator 35 is formed of a magnet such as a neodymium plate or the like and has an upper portion acting as an N pole and a lower portion acting as an S pole. A microwave having a frequency in a range of 300 MHz to 16 GHz in accordance with the concentration of incoming water, more preferably, a frequency in a range of 2.4 GHz to 10.5 GHz from the viewpoint of separating the colloidal particles, and further preferably, a frequency of 10.5 GHz, is generated for about 1 (sec. When such a microwave is emitted to the subject water, the subject water is subjected to the disintegrating treatment, and as a result, fine colloidal particles and water molecules being formed and dispersed sporadically.

Then, the resulting water is transported from the second separating pipe 33 to the deodorizing means 6.

The deodorizing means 6 will be described below.

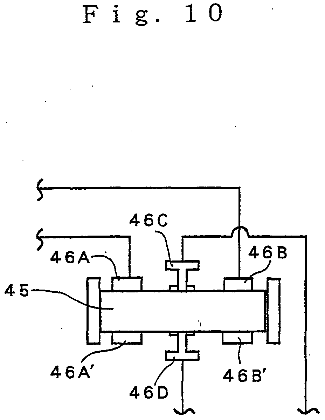

A deodorizing box 37, which is a high-frequency rage electromagnetic ultrasonic generator, is disposed in the deodorizing means 6. A deodorizing pipe 38 is disposed to extend through the deodorizing box 37 and connected to the second separating pipe 33. External magnets 39a having N and S polarities are disposed at upper and lower locations on the outer side of the deodorizing pipe 38, respectively, as shown in Fig.9, and a rod-shaped internal magnet 39b is disposed at the axial center position in the deodorizing pipe 38, so that its polarities are opposed to the opposite polarities of the external magnets 39a. In the first embodiment, each of the external magnets 39a comprises an electromagnet, and the internal magnet 39b comprises a permanent magnet. Further, high frequency range ultrasonic wave generators 40 are disposed respectively on left and right sides of the deodorizing pipe 38 for generating a ultrasonic wave as a longitudinal wave having a frequency in a range of 3 MHz to 300 MHz in accordance with the concentration of the subject water, more preferably, a frequency of 100 MHz at a period of about 0.5 sec.

The subject water is passed through the deodorizing pipe 38, while being mixed or vibrated in the deodorizing pipe 38. In the first embodiment, the subject water is ejected from a nozzle (not shown) disposed within the deodorizing pipe 38, and a vibrating plate (not shown) is disposed in the vicinity of an outlet of the nozzle, so that the subject water is vibrated violently by collision thereof against the vibrating plate.

A composite field comprising a magnetic field and an electric field is formed by the external magnets 39a, the internal magnet 39b and the high frequency range ultrasonic generator 40, thereby generating a so-called electromagnetic ultrasonic wave. This electromagnetic ultrasonic wave acts to fragmentize or decompose the amino acid in the colloidal particles to completely remove an odor from the subject water.

The electromagnetic ultrasonic wave may be emitted even to the disintegrating/electrically charging pipe 30 of the disintegrating/electrically charging means 4 at an output of 1 kW in such a manner to alternately apply an electric field in a magnetic field.

The subject water deodorized in the deodorizing pipe 38 is transported to the second flocculating means 7 acting at the subsequent treating stage.

The second flocculating means 7 will be described below.

A second flocculating pipe 41 is disposed in the second flocculating means 7. An electromagnetic coil 42 is wound around an outer periphery of the second flocculating pipe 41, and a second low frequency range ultrasonic wave generator 43 is disposed on the outer periphery of the second flocculating pipe 41 for generating a ultrasonic wave having a low frequency equal to or lower than 50 kHz in accordance with the concentration of the subject water.

When the ultrasonic waver having the frequency in the low range is emitted to the subject water by the second low frequency range ultrasonic wave generator 43, the water molecules charged at negative electricity, of the water molecules and colloidal particles arranged irregularly, are attracted to a wall surface of the second flocculating pipe 41 and flow along the wall surface, and the colloidal particles charged at positive electricity flow to the center of the second flocculating pipe 41. Thus, the water molecules and the colloidal particles are dispersed, and the colloidal particles are flocculated together.

The subject water subjected to the second flocculating treatment in the above manner is transported to the subsequent high-voltage pulse treating means 8.

The high-voltage pulse treating means 8 is adapted to generate plasma to remove nitrogen molecules by applying a high voltage of about 10 kV to 60 kV at different periods.

For this purpose, a high-voltage pulse treating pipe 45 is disposed in the high-voltage pulse treating means 8, so that it is connected to the second flocculating pipe 41, as shown in Fig.10. A plurality of electrodes 46A, 46A', 46B, 46B', 46C and 46D as high-voltage pulse generators, to which a high voltage is applied at different periods, are disposed in the high-voltage pulse treating pipe 45.

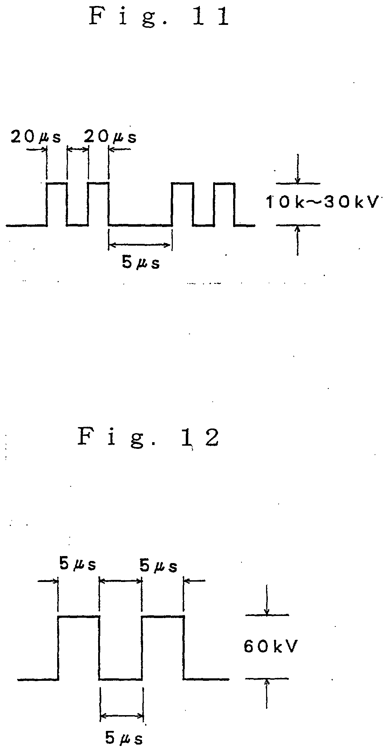

As shown in Fig.11, a voltage in a range of 10 kV to 30 kV is applied for 20 ( sec., and after a lapse of 20 ( sec., is applied again for 20 ( sec., between the electrodes 46A and 46A' and between the electrodes 46B and 46B'. After a lapse of 5 ( sec., a similar pattern of application of voltage is repeated again.

On the other hand, a voltage of about 60 kV is applied for 5 ( sec., at a period of 10 ( sec., between the electrodes 46C and 46D, as shown in Fig.12.

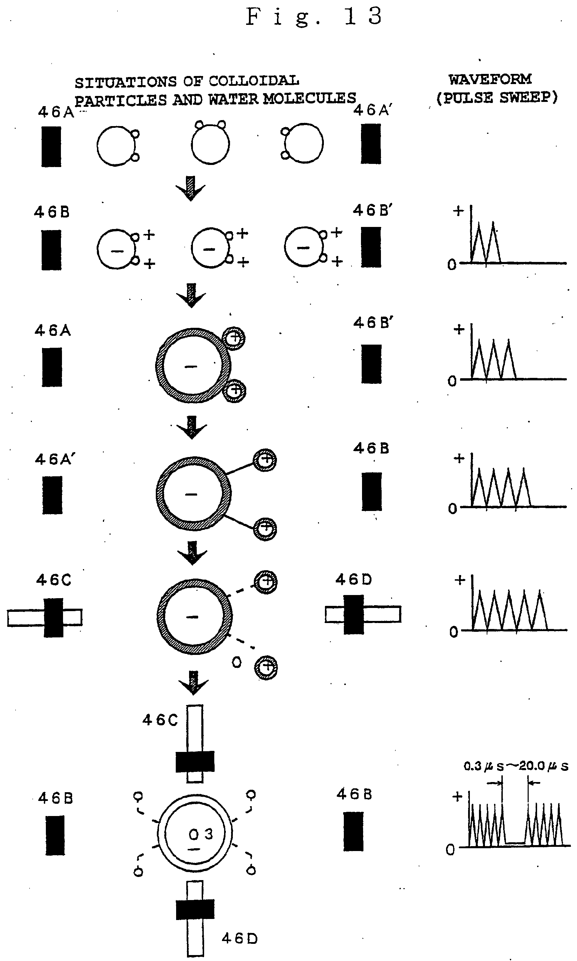

Fig.13 shows variations in states of the water molecules and colloidal particles, when the voltages have been applied by the electrodes 46A, 46A', 46B, 46B', 46C and 46D. A large circle shown in Fig.13 is a water molecule, and a smaller circle bonded to the water molecule is colloidal particles. First, the water molecules are charged at negative electricity, and the nitrogen compound are charged at positive electricity, by the high-voltage pulses between the electrodes 46A and 46A' and between the electrodes 46B and 46B'. In other words, since a negative charge or positive charge is supplied to the treated water by application of the high-voltage pulse, either the negatively charged region or positively charged region is increased, thus resulting in creation of a zone in which the negative charged and positively charged regions are generally separated. An effect of separating the water molecules and the nitrogen molecules from each other, i.e., an effect of separating the nitrogen compounds, is produced by the high-voltage pulses between the electrodes 46A and 46B' and between the electrodes 46A' and 46B, and the water molecules and the nitrogen molecules are spouted by the high-voltage pulse between the electrodes 46C and 46D. Simultaneously with the spattering of the nitrogen molecules, the oxygen molecules which are being treated are bonded to produce ozone. This ozone has an effect of decolorizing and sterilizing the subject water.

Therefore, the nitrogen compounds in the water are removed, and the same time, the subject water can be decolorized and sterilized, by the high-voltage pulse treating means 8.

A fourth transporting pipe 19d is connected to an outlet of the high-voltage pulse treating pipe 45 of the high-voltage pulse treating means 8, so that the subject water is transported to a discharge tank 48 of the flocculate discharging means 9 as a subsequent treating stage.

The flocculate discharging means 9 will be described below.

The flocculate discharging means 9 is adapted to attract the colloidal particles flocculated into flocculates by the second flocculating treatment to discharge them downwards.

The discharge tank 48 for storage of the subject water is disposed in the flocculate discharging means 9, as shown in Figs.1, 2 and 6. The fourth transporting pipe 19d is connected to a bottom of the discharge tank 48, so that the subject water containing the flocculates flows into the discharge tank 48, and the permanent magnets 28b of neodymium or the like are laid on the bottom of the discharge tank 48. Thus, the flocculates in the electrically charged states in the subject water flowing through the fourth transporting pipe 19d into the discharge tank 48 are attracted by the magnetic forces of the permanent magnets 28b to become settled down to the bottom.

Then, the sediments collected to the bottom of the discharge tank 48 are discharged through a third discharge pipe 20c connected to the bottom of the discharge tank 48 to the dehydrating means 12.

The magnetic force of each of the permanent magnets 28b is determined in accordance with the concentration of the organic substances in the subject water. When a high-concentration raw water, i.e., a raw water containing a large amount of colloidal particles is to be treated, it is necessary to attract a large amount of flocculates and hence, the magnetic force of the electromagnet is set at a large value. On the other hand, when a low-concentration raw water is to be treated, the magnetic force of the electromagnet is set at a small value.

An air discharge port 49 and an ozone discharge port 50 are disposed at upper portions of the discharge tank 48, so that air and ozone produced from the nitrogen compounds by the high-voltage pulse treatment are discharged to the outside through the air discharge port 49 and the ozone discharge port 50.

Then, the subject water with the flocculates and the like removed therefrom within the discharge tank 48 is transported through a fifth transporting pipe 19e connected to an upper portion of a side of the discharge tank 48 to the water molecule disintegrating means 10.

The water molecule disintegrating means 10 will be described below.

The water molecule disintegrating means 10 is adapted to further disintegrate the water molecules of the water treated by the above-described processing, by the action of an intensive magnetic force, thereby producing activated water.

For this purpose, as shown in Figs.1, 2 and 6, a disintegrating treatment tank 51 is disposed in the water molecule disintegrating means 10, and a tube 62 made of an insulating material such as ceramics is disposed, with its vertical direction being longitudinal, in the disintegrating treatment tank 51. The fifth transporting pipe 19e is connected to an upper portion of a side of the disintegrating treatment tank 51, and an internal transporting pipe 53 is disposed in the disintegrating treatment tank 51 to permit the communication between the fifth transporting pipe 19e and the tube 52. Thus, the water subjected to the water molecule disintegrating treatment is permitted to flow through the fifth transporting pipe 19e and the internal transporting pipe 53 into the tube 52.

The tube 52 has an opened bottom, and an electromagnetic coil (not shown) is wound around an outer peripheral surface of the tube 52. Therefore, when electric current flows across the electromagnetic coil, a downward directed force is generated within the tube 52, whereby the subject.water flowing in the tube 52 is fed toward the bottom of the water molecule disintegrating tank 51.

On the other hand, permanent magnets 28c and 28d of neodymium and the like having a magnetic force of about 10,000 Gauss are laid as magnetic field forming members on inner surfaces of top and bottom portions of the water molecule disintegrating tank 51, respectively, so that an intensive magnetic field is formed within the water molecule disintegrating tank 51. Thus, when the subject water is passed through the water molecule disintegrating tank 51, the water molecules, i.e., so-called clusters are disintegrated more finely to produce activated water.

Therefore, when the water treated in the above manner is utilized as drinking water for an animal or mammal and supplied to a plant, it can exhibit a remarkable effect for the growth thereof.

The subject water after being subjected to the water molecules integrating treatment is discharged, as it is, through a discharge pipe 54 connected to an upper portion of the side of the water molecule disintegrating tank 51, and thus, can be released into a river or the like or utilized as water or the like fed to the animal or the plant.

It should be noted that a fourth discharge pipe 20d is connected to the bottom of the water molecule disintegrating tank 51, so that the final colloidal particles attracted to the permanent magnets 28d laid on the bottom is discharged to the dehydrating means 12.

In addition, the air discharge port 49 and the ozone discharge port 50 for discharging air and ozone produced from the nitrogen compounds or the like and remaining in the subject water are defined in the upper portion of the water molecule disintegrating tank 51.

The oxidizing and reducing means 11 will be described below.

The oxidizing and reducing means 11 comprises four electrode members 55 having a suitable potential, as shown in Figs.1, 2 and 6. The subject water ionized by the above-described processing is subjected to an oxidizing and reducing reaction on the surfaces of the electrode members 55 to deliver and receive electrons. The oxidizing and reducing reaction causes the subject water to be restored from the ionized state in which the chemical reaction is liable to occur, to a stable state in which the chemical reaction is difficult to occur.

It should be noted that the oxidizing and reducing reaction is conducted as an electrode reaction through the electrode members 55 in the first embodiment, but as required, suitable oxidizing agent and a reducing agent may be used.

The dehydrating means 12 will be described below.

A dehydrator 56 is disposed in the dehydrating means 12 to remove water contained in the sediments discharged from the above-described means by an action such as a centrifugal separation or the like. The dehydrator 56 is capable of reducing the water content of the sediment from about 98 % to about 80 %. Therefore, the dehydrated sediment can be treated more effectively in a composting plant.

As described above, the raw water diluting pipe 57 for transporting the water resulting from the dehydration and the washing water discharged from the dehydrator 56 to the raw water tank 16 to dilute the raw water.

On the other hand, the solids resulting from the dehydration conducted by the dehydrator 56 are discharged to the solid receiving section 58. Thereafter, the solids are transported along with the solids filtered off by the filtering means 1 to the composting plant, where they are used as a composting material and subjected to a composting treatment for reuse as an agricultural fertilizer.

The centralized control means 13 will be described below.

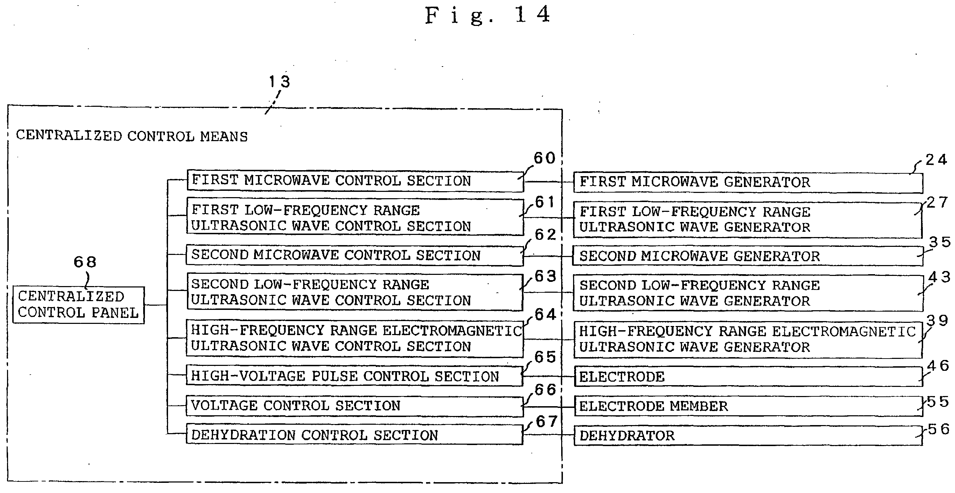

As shown in the block diagram in Fig.14, the centralized control means 13 includes a first microwave control section 60 for controlling an output of a microwave of 300 MHz to 16 GHz generated in the first separating means 2, a first low-frequency range ultrasonic wave control section 61 for controlling an output of a ultrasonic wave having a low frequency equal to or lower than 100 kHz and generated in the first flocculating means 3, a second microwave control section 62 for controlling an output of a microwave of 300 MHz to 16 GHz generated in the second separating means 5, a second low-frequency range ultrasonic wave control section 63 for controlling an output of a ultrasonic wave having a low frequency equal to or lower than 50 kHz and generated in the second flocculating means 7, a high-frequency range electromagnetic wave control section 64 for controlling an output of an electromagnetic ultrasonic wave having a high frequency in a range of 3 MHz to 300 MHz and generated in the deodorizing means 6, a high-voltage pulse control section 65 for controlling an output of a high-voltage pulse applied in the high-voltage pulse treating means 8, a voltage control section 66 for controlling the voltage applied to the electrode members 55 in the oxidizing and reducing means 11, and a dehydration control section 67 for controlling the operation of the dehydrator 56 in the dehydrating means 12. Each of the control sections is adapted to be controlled easily by the operation of corresponding one of switches (not shown) on a centralized control panel 68, but is controlled automatically in a usual state.

A water treating process carried out in the first embodiment will be described below.

In the water treating process in the first embodiment, first, a raw water including a pig-culture drainage, an industrial drainage and the like is passed through the screen in the filtering means 1, whereby it is filtered to remove colloidal particles suspended in the raw water. The colloidal particles are discharged to the feces-dregs receiving section 15, and the filtered raw water is once stored in the raw water tank 16.

Then, the raw water feeding pump 17 draws the raw water from the raw water tank 16 and feeds it to the first separating pipe 22 of the first separating means 2. The first separating means 2 emits a microwave of 10.5 GHz from the first microwave generator 24 to the raw water to separate the raw water into water molecules and colloidal particles. The subject water subjected to the separating treatment is transported through the second transporting pipe 19b to the first flocculating means 3. The first flocculating means 3 emits a ultrasonic waver having a frequency of any of 28 kHz, 40 kHz and 48 kHz from the first low-frequency range ultrasonic wave generators 27a and 28b to the subject water under the control conducted by the first low-frequency range ultrasonic wave control section 61, thereby flocculating the colloidal particles and dispersing them from the water molecules. Then, the permanent magnets 28a disposed on the bottom surface of the first flocculating tank 26 attracts the flocculated colloidal particles to settle them and discharge them into the second discharge pipe 20b.

On the other hand, the subject water is transported through the third feeding pipe to the disintegrating means 4 under a moderate pressure by the pressurizing pump 29. The disintegrating means 4 disintegrates the water molecules in the raw water under actions of the magnetic force of the neodymium plate 31a and of the mixing by the neodymium element blades 32 to charge the water molecules at negative electricity and at the same time, charge the fine colloidal particles at positive electricity, thereby bringing them into an ordered arrangement.

Then, the water after being subjected to the disintegrating and electrically charging treatment is transported to the second separating means 5. The second separating means 5 emits a microwave of 10.5 Hz from the second microwave generator 35 to the subject water under the control conducted by the second microwave control section 62 of the centralized control means 13, thereby separating the subject water into the water molecules and the colloidal particles. The subject water subjected to the separating treatment is transported to the deodorizing means 6.

The deodorizing means 6 emits an electromagnetic ultrasonic wave of about 100 MHz from the high-frequency range ultrasonic wave generator 40 in a magnetic field under the control conducted by the high-frequency range electromagnetic ultrasonic wave control section 64 of the centralized control means 13, thereby removing a offensive odor from the subject water by such electromagnetic ultrasonic wave.

The deodorized water is transported to the second flocculating means 7. The second flocculating means 7 emits a ultrasonic wave of 50 kHz or lower from the second low-frequency range ultrasonic wave generator 43 under the control conducted by the second low-frequency range ultrasonic wave control section 63 of the centralized control means 13, thereby flocculating the colloidal particles and dispersing them from the water molecules.

Then, the subject water subjected to the second flocculating treatment is transported to the high-voltage pulse treating means 8. The high-voltage pulse treating means 8 applies voltage of 10 kV to 30 kV to between the electrodes 46A and 46A' and between the electrodes 46B and 46B' and at the same time, applies voltage of about 60 kV to between the electrodes 46C and 46D, under the control conducted by the high-voltage pulse control section 65 of the centralized control means 13, thereby generating plasma to separate off the nitrogen compounds contained in the subject water. Ozone generated at that time deodorizes and sterilizes the subject water.

The water with the nitrogen compounds removed therefrom is transported through the fourth transporting pipe 19d to the discharging tank 48 of the flocculate discharging means 9.

In the discharging tank 48, the permanent magnets 28b attract the flocculates of the colloidal particles by their magnetic forces to settle them down to the bottom discharging tank 48 and then, the flocculates are transported through the third discharge pipe 20c to the dehydrating means 12.

The subject water depleted of the flocculates is transported in an order of from the side of a supernatant through the fifth transporting pipe 19e to the water molecule disintegrating tank 51 of the water molecule disintegrating means 10. The water molecule disintegrating means 10 forms an intensive magnetic field by the permanent magnets laid on the top and bottom surfaces of the water molecule disintegrating tank 51, thereby disintegrating the water molecules of the incoming subject water to produce an activated water.

In addition, in the water molecule disintegrating tank 51, the electrode members 55 of the oxidizing and reducing means 11 causes the oxidizing and reducing reaction in the ionized subject water to occur on the surface thereof, thereby restoring the subject water to a stable water.

Thereafter, the water subjected to the disintegrating treatment and the oxidizing and reducing treatment is discharged through the discharge pipe 54, and thus released to a river, or utilized as drinking water for an animal, or as nutritive water provided to a plant.

On the other hand, the sediments of the colloidal particles discharged at each of the treating stages are transported through the first discharge pipe 20a, the second discharge pipe 20b, the third discharge pipe 20c and the fourth discharge pipe 20d to the dehydrator 56 of the dehydrating means 12. In the dehydrator 56, the solids are subjected to the centrifugal separation under the control conducted by the dehydration control section of the centralized control means 13, whereby water is removed from the sediments.

Then, the water removed by the hydrator 56 is transported along with the washing water discharged from the dehydrator 56 through the raw water diluting pipe 57 to the raw water tank 16, where it is utilized to dilute the raw water. On the other hand, the solids resulting from the dehydration are once accommodated in the solid receiving section 58 and then transported to the composting plant, where they are subjected to the composting treatment for utilization as an agricultural fertilizer.

Therefore, according to the first embodiment of the present invention, the colloidal particles (including heavy metals) and the nitrogen compounds contained in the raw water such as a pig-culture drainage and an industrial drainage can be removed reliably and at the same time, the water can be deodorized, decolorized and sterilized by the simple operation using the centralized control means 13, thereby producing an activated ands stable water comprising extremely disintegrated water molecules. Thus, the activated water can be released as it is, but also utilized as drinking water for an animal or as water supplied to a plant. If the activated water is used in such an application, it is remarkably effective for the growth of the animal or plant.

In addition, the equipment required for treatment of the water can be reduced in scale and at the same time, the consumed electric powder can be reduced, leading to reductions in initial cost and running cost.

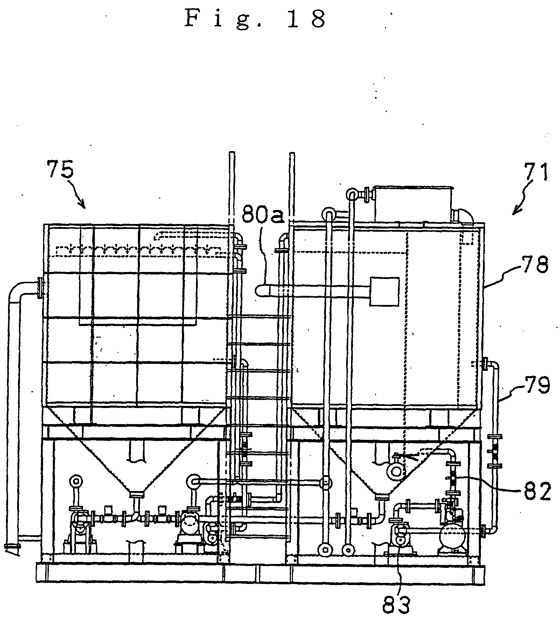

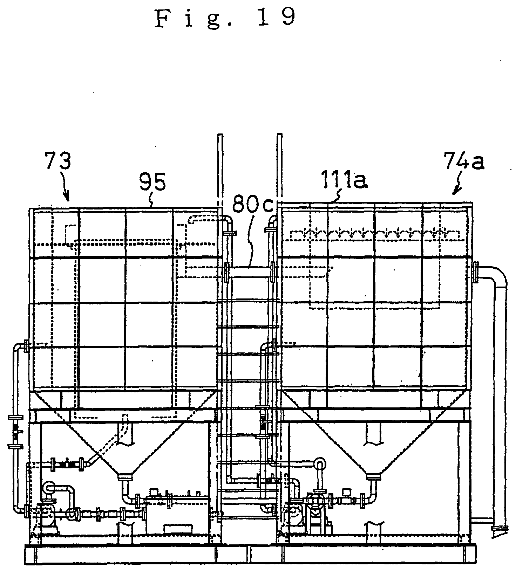

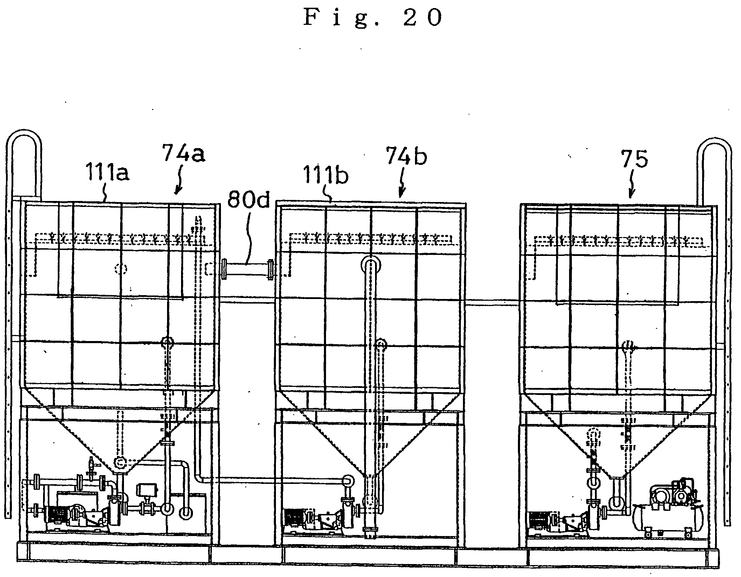

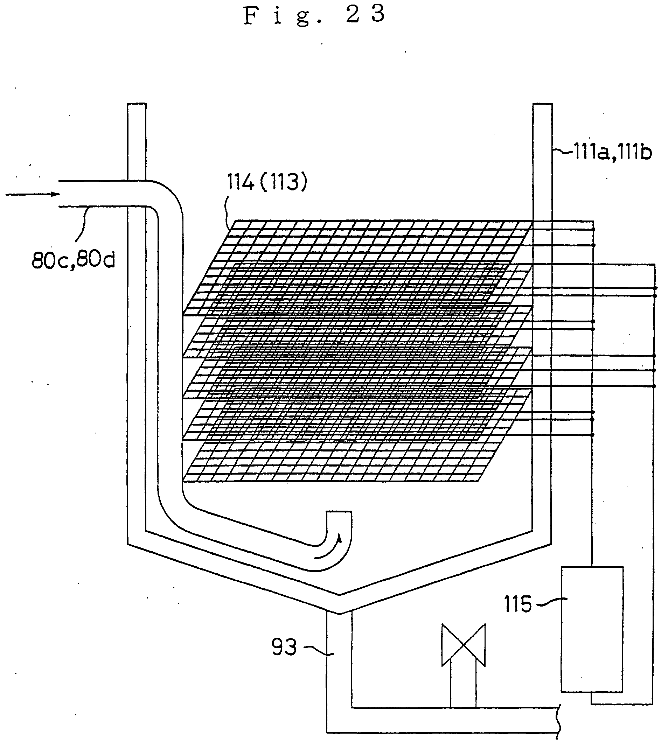

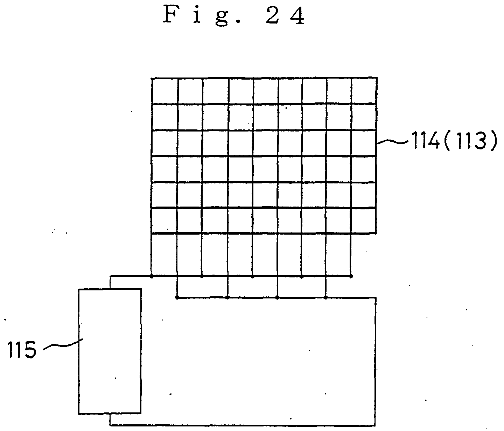

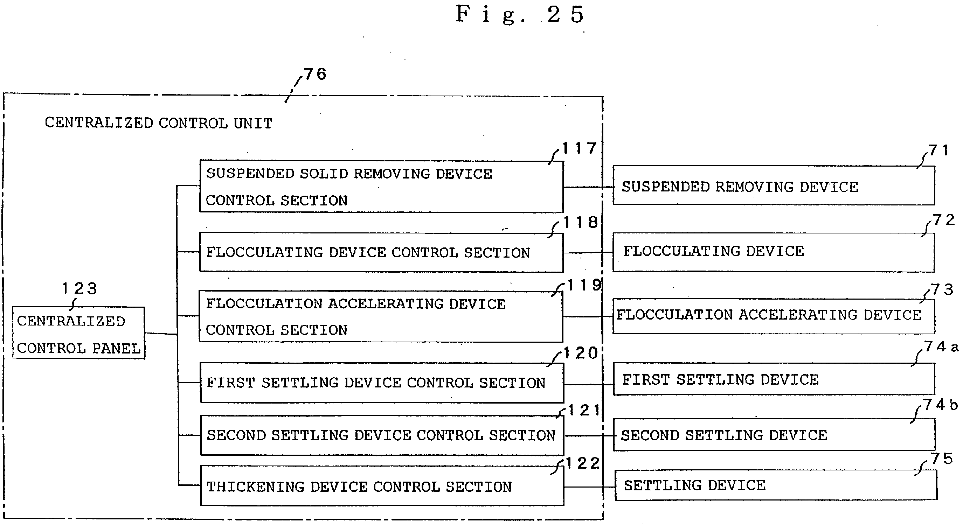

A second embodiment of a liquid treating system according to the present invention will now be described with reference to Figs.8, 9 and 15 to 27.

Portions or components in the second embodiment corresponding to those in the first embodiment are designated by like reference characters and described.

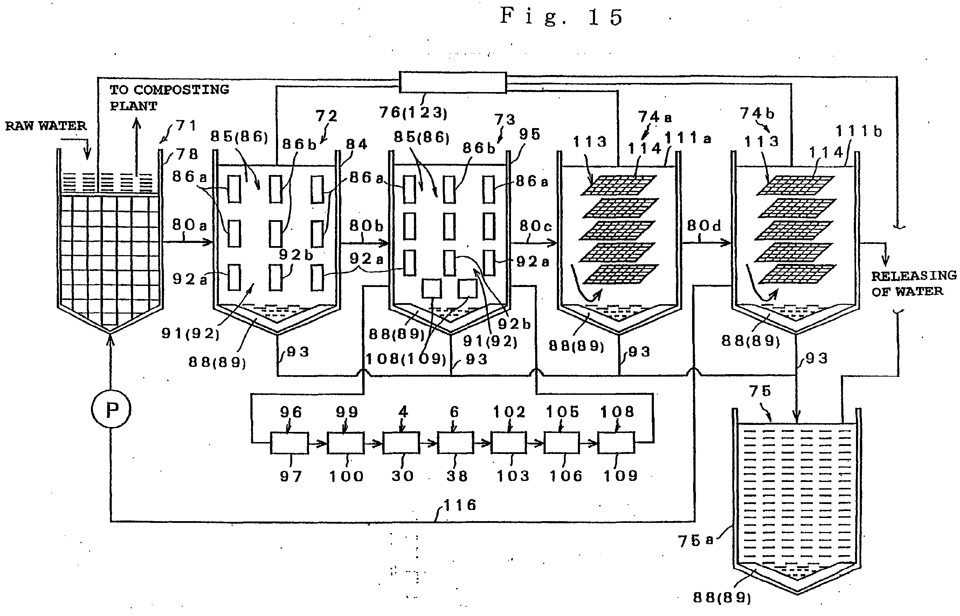

As shown in Figs.15 to 20, the liquid treating system of the second embodiment comprises mainly, a suspended solid removing device 71 for removing suspended solids in a water to be treated (which will be referred to as a subject water), a flocculating device 72 for separating colloidal particles of water-soluble organic substances and microorganisms incorporated in the subject water from water molecules to flocculate the colloidal particles and to sterilize, deodorize and decolorize the water, a flocculation accelerating device 73 for accelerating the flocculation of the colloidal particles and promoting the sterilizing and deodorizing treatments and the like, first and second settling devices 74a and 74b for forcibly settling the flocculates remaining in the water to remove them, a thickening device75 for thickening the flocculates by removing water from the flocculates removed by the flocculating treatment, and a centralized control unit 76 for controlling the treating operations in these devices.

When solid materials having a large weight ratio such as feces and urine are contained in a raw water to be treated, a centrifugal separator or a screen as a pre-treating means may be disposed, as desired, at a location upstream of the suspended solids removing device 71, so that the solid materials having the large weight ratio are centrifugally separated off from the raw water including the feces and urine.

The arrangement and operation of the devices will be described below in detail.

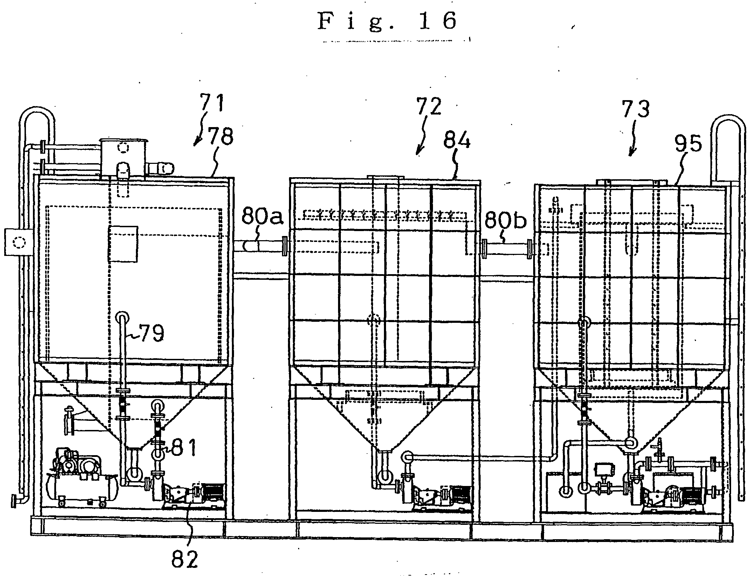

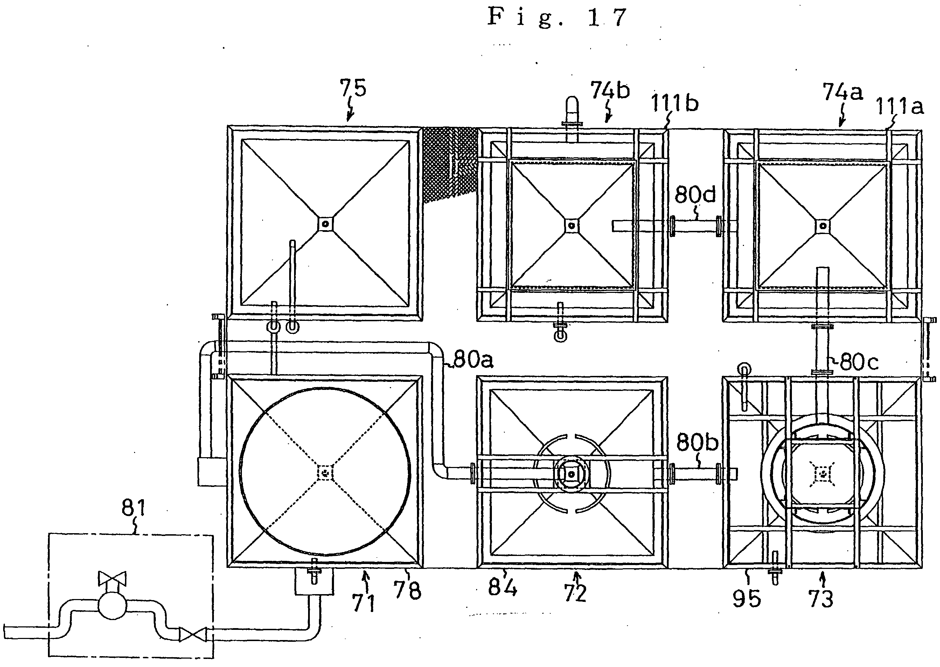

A suspended solid removing tank 78 for storage of the raw water depleted of the solid materials is disposed in the suspended solids removing device 71. As shown in Figs.16 to 18, a raw water inlet pipe 79 is connected to a front side (as viewed in Fig.16) of the suspended solid removing tank 78 for permitting the raw water depleted of the solid materials to flow into the suspended solid removing tank 78, and a first transporting pipe 80a is connected to a left side (as viewed in Fig.17) of the suspended solid removing tank 78 for transporting the water depleted of the suspended solids to a next treatment. A raw water pump 81 is connected to the raw water inlet pipe 79 and serves as a power source for permitting the raw water to flow into the suspended solid removing tank 78. An air intake pipe 82 is connected to a lower portion of the suspended solid removing tank 78, and a plurality of rotating blades (not shown) are disposed at upper locations within the inside of the suspended solid removing tank 78, so that they are rotated eccentrically.

An air compressor 83 is mounted to the air intake pipe 82, so that air of a diameter on the order of several ten (m is drawn from the air compressor 83 through the air intake pipe 82 into the suspended solid removing tank 78, and bubbles produced from this air adsorb the suspended solids in the raw water and rises up to the water surface along with the suspended solids entrained therein. The suspended solids risen up to the water surface are scraped together by the rotating blades; discharged sequentially through a discharge port (not shown), and transported to a composting plant (not shown).

The treatment water from which the suspended matter has been removed at the suspended matter removing device is conveyed through the first conveying pipe 80a to the flocculating device 72.

A flocculating tank 84 for storage of the water after being subjected to the suspended solids removing treatment is disposed in the flocculating device 72, as shown in Figs.15 to 17. AC high-voltage three-electrodes 86 comprising two anodes 86a and a single cathode 86b and constituting an electrically charging/cell destructing means 85 are disposed within the flocculating tank 84, as shown in Fig.15. The AC high-voltage three-electrodes 86 are usually adapted to apply voltage of 20 kV having a frequency in a range of about 600 kHz to 1,800 kHz at 8 mA to 100 am at a predetermined period in a range of about 10 mess to 40 mess in a switched manner, and in the second embodiment, are adapted to apply voltage of 25kV to 28 kV having a frequency of 970 kHz at 8 am to 12 am and at a predetermined period of about 12 mess. The switching of the voltages applied by the three electrodes at the predetermined period is intended to prevent the wearing of the AC high-voltage electrodes 86 and to widen that area in the flocculating tank 84 which is to be subjected to the electrically charging and cell-destructing treatments.

The application of the high-voltage pulse by the AC high-voltage electrodes 86 is carried out by a glow discharging process or an arc discharging process, and the anodes 86a and the cathode 86b are disposed on the water surface and under the water, respectively, or both under the water to discharge electricity into the water.

Only one set of the AC high-voltage electrodes 86 may be disposed, but a plurality of sets of the AC high-voltage electrodes 86 may be disposed. In the second embodiment, three sets of the AC high-voltage electrodes 86 are disposed, so that a circuit can be switched, as required, to the optimal set of the AC high-voltage electrodes 86 depending on the concentration and the amount and the type of the subject water.

An alternating electric field produced by a high voltage of a high frequency applied to the subject water by the AC high-voltage electrodes 86 electrically charges the colloidal particles of the water-soluble organic substances and microorganisms in the water to flocculate the colloidal particles and further to destruct the water-soluble organic substances and the cells of microorganisms in the water, thereby bringing the microorganisms such as a colon bacillus to the death.

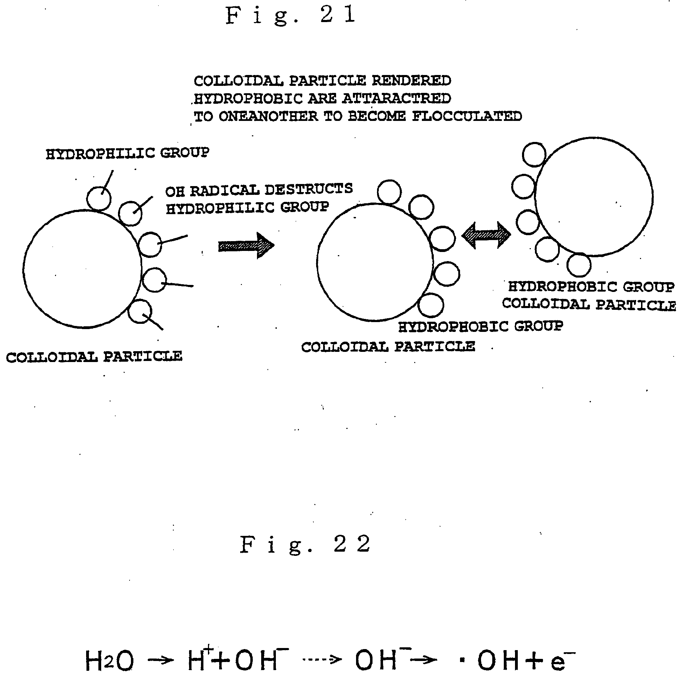

A mechanism for flocculating the colloidal particles of the water-soluble organic substances and the like in the second embodiment will be described below. The term "colloidal particles" means fine particles of water-soluble organic substances dispersed in the liquid, and particles of substance other than liquid molecules, such as microorganisms, fine algae and the like. The colloidal particles are in stable hydrated states or in meta-stable hydrophobic colloidal states in the liquid. Therefore, to separate and remove the colloidal particles of the water-soluble organic substances and the like from the subject water, an energy equal to or larger than a bond energy of hydrophilic groups of water molecules may be applied to the hydrophilic groups, thereby cutting the hydrophilic groups to render the hydrophilic colloid hydrophobic and further, breaking the meta-stable hydrophobic colloidal states to render the colloidal particles hydrophobic, thus flocculating the colloidal particles. For this purpose, in the second embodiment, the hydrophilic groups are cut by OH radicals produced by the anodes 86a by the energy of the high-voltage pulse, as shown by a chemical formula in Fig.22, and the colloidal particles are electrically charged by an electric field produced by the high-voltage pulse, whereby the meta-stable hydrophobic colloidal states are broken to render the colloidal particles hydrophobic, thereby flocculating the colloidal particles. In addition, the deodorization and the decolorization of the water molecules are achieved by the flocculation and separation of the colloidal particles from the water molecules.

The flocculated colloidal particles are risen along with gases such as nitrogen, carbon dioxide, oxygen, hydrogen generated by the above-described treatment, and settled after diffusion of these gases. For this purpose, permanent magnets 89 of neodymium or the like as a flocculate discharging means 88 are laid on the bottom of the flocculating tank 84, as shown in Fig.15, so that the flocculates in the electrically charged states are attracted and settled by magnetic forces of the permanent magnets 89.

On the other hand, the cells of water bloom and the like and bacteria such as colon bacillus are destructed by the OH radicals produced by the high-voltage pulse to die out. Alternatively, if the cells in the water are between the aforementioned electrodes 86, the biological membrane has a resistance of at least 1000 times higher than the liquid inside and outside the cells (approximately 10⁹ Ω cm⁻¹) so that it may be considered a sort of condenser, and therefore application of a pulse voltage exceeding the threshold value of the dynamic resistance of the biological membrane results in reversible disintegration of a portion of the biological membrane and opening of pores in the cells upon discharge, thus killing any microorganisms such as colon bacillus.

Thereafter, the sediments collected on the bottom of the flocculating tank 84 are discharged through a discharge pipe 93 connected to the bottom of the flocculating tank 84 to the thickening device 75.

Further, DC high-voltage electrodes 92 constituting an oxidizing/reducing means 91 and comprising two anodes 92a and a single cathode 92b are disposed within the flocculating tank 84. The DC high-voltage electrodes 92 are adapted to apply DC voltages of about 18 to 55 V and about 80 to 160 V at about 3 to 50 A. In the second embodiment, from the viewpoint of promoting the oxidizing and reducing reaction more effectively, the DC high-voltage electrodes 92 are adapted to apply DC voltages of about 55 V and about 100 V at about 7 to 13 A. From the viewpoint of preventing the wearing of the electrodes and conducting the oxidizing and reducing reaction in a wider region within the flocculating tank 84, the polarities of the anodes 92a and the cathode 92b are switched from each other at a predetermined period.

The application of the DC high voltage ensures that the oxidizing and reducing reaction can be promoted to advance the electrical charging, and the carbon components can bee decomposed, thereby equalizing the dielectric constant.

In the second embodiment, each of the AC high-voltage electrodes 86 and the DC high-voltage electrodes 92 of the flocculating device 72 is formed of graphite. However, the material for such electrodes is not limited to graphite, and for example, each of the cathodes 86b and 92b may be formed of a magnesium-based material such as a lime rod and used as an ion medium electrode. When these cathodes 86b, 92b are used, the magnesium dissolves in the treatment water and exhibits the function of a flocculating agent, so that the flocculating effect on the separated colloidal particles is further promoted.

Also, the AC high voltage electrode 86 of the flocculating device 72 may be formed of a platinum and titanium alloy material, while the DC high voltage electrode 92 may be formed of a copper and tungsten alloy material. If such an electrode material is used, the delivery and reception of electron can be promoted by about 10 times as compared with the usual case, while suppressing the wearing of the electrodes.

In the second embodiment, when each of the AC high-voltage electrodes 86 is formed from a platinum-titanium alloy material, the weight ratio of platinum to titanium is set at 7:3, taking account of the weight, the manufacture cost and the easy handling. On the other hand, when each of the DC high-voltage electrodes 92 is formed from a copper-tungsten alloy material, the weight ratio of copper to tungsten is set at 7:3 for a similar reason.

A second transporting pipe 80b is connected to a right side (as viewed in Fig.16) of the flocculating tank 84, so that the subject water after being subjected to the flocculating treatment is transported through the second transporting pipe 80b to the next flocculation accelerating device 73.

The flocculation accelerating device 73 will be described below.

A flocculation accelerating tank 95 for storage of the subject water after being subjected to the flocculating treatment in the flocculating device 72 is disposed in the flocculation accelerating device 73, as shown in Figs.15 to 17 and 19. AC high-voltage electrodes 86 constituting an electrically charging/cell destructing means 85 and DC high-voltage electrodes 92 constituting an oxidizing and reducing means 91 are disposed in the flocculation accelerating tank 95, and each comprise three electrodes as in the above-described flocculating tank 84, so that the separating and flocculating treatment is conducted continuously. Further, various treating means are disposed in the flocculation accelerating tank 95 to separate and flocculate the fine colloidal particles incorporated in the subject water and to deodorize the colloidal particles themselves.

A wave guide 97 constituting a microwave separating means 96 is connected to the flocculation accelerating tank 95 through a transporting pipe (not shown). A microwave which is an electromagnetic wave and has a frequency in a range of 300 MHz to 16 GHz depending on the concentration of the subject water, more preferably, a frequency in a range of 2. 4GHz to 10.5 GHz in consideration of the effective separation of the colloidal particles, and further preferably, a frequency of 10.5 GHz, is emitted from the waver guide 97, so that the colloidal particles incorporated in finer forms in the subject water are separated from the water molecules.

A ultrasonic wave box 100 constituting a first ultrasonic wave flocculating means 99 is connected to the wave guide 97 constituting the microwave separating means 96 through a transporting pipe (not shown), and an oscillator (not shown) is disposed in the ultrasonic wave box 100 for oscillating a ultrasonic wave having a frequency in a range of 40 kHz to 1,200 kHz, more preferably a frequency of 950 kHz, so that the separated colloidal particles in the subject water are flocculated and dispersed from the water molecules by a cavitation effect and the like of the ultrasonic wave emitted from the oscillator.

A disintegrating/electrically charging pipe 30 such as a mixing pipe having an arrangement equivalent to that of the disintegrating/electrically charging means 4 in the first embodiment is connected to the ultrasonic wave box 100 constituting the first ultrasonic wave flocculating means 99. As shown in Fig.8, neodymium plates 31a are disposed at upper and lower portions of the disintegrating/electrically charging pipe 30, and neodymium element blades 32 each made of a ceramic material and having neodymium elements 31b embedded therein and having a magnetic force of about 11,000 Gauss are disposed within the disintegrating/electrically charging pipe 30. Each of the neodymium element blades 32 is formed from a spirally twisted flat plate and has the neodymium elements 31b of N and S polarities embedded alternately, for example, in an order of "NNSSNNSS..." in a widthwise end of the blade 32 in a direction of passage of the subject water, as shown in Fig.8. Thus, the magnetic field generated by the neodymium plates 31a and the mixing action of the neodymium element blades 32 ensure that the water molecules in the subject water are disintegrated and charged with negative electricity, and at the same time, the colloidal particles are disintegrated and charged with positive electricity and ionized severally and brought into the regularly ordered arrangement. Therefore, in the disintegrating/electrically charging means 4, the molecules having the same potential are attracted strongly to facilitate the separating/flocculating treatment of the finer water-soluble organic substances which have been completely not removed at the separating/flocculating treatment by the microwave. The neodymium plate 31a may be formed of an electromagnet.

In addition, as shown in Fig.9, a deodorizing pipe 38 constituting the deodorizing means 6 having the same arrangement as in the first embodiment is connected to the disintegrating/electrically charging pipe 30, and a deodorizing box 37 is disposed to surround the outside of the deodorizing pipe 38. External magnets 39a having N and S polarities are disposed at upper and lower locations on the outer side of the deodorizing pipe 38, respectively, and a rod-shaped internal magnet 39b is disposed at the axial center position in the deodorizing pipe 38, so that its polarities are opposed to the opposite polarities of the external magnets 39a. In the second embodiment, each of the external magnets 39a comprises an electromagnet, and the internal magnet 39b is formed of a permanent magnet. Further, high frequency range ultrasonic wave generators 40 are disposed respectively on left and right sides of the deodorizing pipe 38 for generating a ultrasonic wave as a longitudinal wave having a frequency in a range of 3 MHz to 300 MHz in accordance with the concentration of the subject water, more preferably, a frequency of 100 MHz.

The subject water is passed through the deodorizing pipe 38, while being mixed or vibrated in the deodorizing pipe 38. In the second embodiment, the subject water is ejected from a nozzle (not shown) disposed within the deodorizing pipe 38, and a vibrating plate (not shown) is disposed in the vicinity of an outlet of the nozzle, so that the subject water is vibrated violently by collision thereof against the vibrating plate.

A composite field comprising a magnetic field and an electric field is formed by the external magnets 39a, the internal magnet 39b and the high frequency range ultrasonic generator 40, thereby generating a so-called electromagnetic ultrasonic wave, so that an offensive odor, mainly, an offensive of the colloidal particles themselves is removed from the subjected water by fragmentizing or decomposing the amino acid in the colloidal particles by the electromagnetic ultrasonic wave.

In order to increase the effect provided by such electromagnetic ultrasonic wave, an electric field may be also applied alternately in the magnetic field to the disintegrating/electrically charging pipe 30 of the disintegrating/electrically charging means 4 to generate a ultrasonic wave in a high frequency range at an output of 1 kW.

A high-frequency generating tube 103 constituting a completely separating means 102 is connected to the deodorizing pipe 38 constituting the deodorizing means 6, so that an electromagnetic wave having a frequency in a range of 100MHz to 500 MHz, more preferably a frequency having a frequency of 270 MHz is applied while a high frequency current is simultaneously applied for discharge, to generate an induction plasma by a high frequency electric field, thereby optimally resonating the subject water to promote the adsorption of the water-soluble organic substances. The water-soluble organic substances are prevented from being dissolved again in the water molecules, and are separated from the water molecules, by the induction plasma generated by the high-frequency electric field.

Further, a disintegrating pipe 106 constituting a water molecule disintegrating means 105 is connected to the high-frequency generating tube 103 constituting a completely separating means 102. Permanent magnets of neodymium or the like of about 10, 000 Gauss are embedded as magnetic field forming members in upper and lower portions of the disintegrating pipe 106, respectively, so that an intensive magnetic field is formed. Thus, when the subject water is passed through the disintegrating pipe 106, clusters of water are more disintegrated by the action of the intensive magnetic field to produce a so-called activated water.

The flocculation accelerating tank 95 is connected to the disintegrating pipe 106 constituting the water molecule disintegrating means 105 through a transporting pipe (not shown) , so that the subject water resulting from the above-described treatments is permitted to flow again into the flocculation accelerating tank 95.

In addition to the AC high-voltage electrodes 86 and the DC high-voltage electrodes 92, a plurality of ultrasonic wave generators 109 constituting a second ultrasonic wave flocculating means 108 for generating a ultrasonic wave of 100 kHz or lower are also disposed in the flocculation accelerating tank 95. In the second embodiment, the ultrasonic wave generators 109 are adapted to generate ultrasonic waves as longitudinal waves having frequencies of 28 kHz, 40 kHz and 48 kHz, and a ultrasonic wave as a lateral wave having a frequency of 100 kHz. These ultrasonic waves are used properly depending on the concentration of the subject water, and serve to flocculate the water-soluble organic substances and to disperse the flocculates and the water molecules.

Permanent magnets 89 of neodymium or the like constituting a flocculate discharging means 88 ate laid on the internal bottom of the flocculation accelerating tank 95, so that the flocculates in electrically charged states in the subject water flowing into the flocculation accelerating tank 95 are attracted and settled down on the bottom by the permanent magnets 89.

Thereafter, the sediments collected on the bottom of the flocculation accelerating tank 95 are discharged through a discharge pipe 93 connected to the bottom to the thickening device 75.

In the second embodiment, for the manufacturing convenience, the microwave separating means 96, the ultrasonic wave flocculating means, the disintegrating/electrically charging mean, the deodorizing means, the completely separating means 102 and the water molecule disintegrating means 105 are disposed outside the flocculation accelerating tank 95. However, they may be disposed within the flocculation accelerating tank, and even in this case, an equivalent effect can be provided. In the flocculation accelerating tank 95, the subject water is circulated sequentially by a pump or the like, and when a large amount of the subject water is to be treated, the circulating speed is increased, and the subject water is circulated a plurality of times.

The first settling device 74a and the second settling device 74b will be described below.

The first settling device 74a is connected with the flocculation accelerating device 73 through a third transporting pipe 80c, and the second settling device 74b is connected with the first settling device 74a through a fourth transporting pipe 80d. For provision for the treatment of a severely dirty water, the two first and second settling devices 74a and 74b having the same arrangement are disposed in order to more reliably remove dirt such as water-soluble organic substances from the dirty water, but the only one settling devices 74 exhibits a satisfactory effect.

As shown in Figs. 15, 17, 19, 20, 23 and24, a first settling tank 111a and a second settling tank 111b for storage of the subject water resulting from the treatment in the flocculation accelerating device 73 are disposed in the first and second settling devices 74a and 74b, respectively. A plurality of lattice-shaped electrically separating membranes 114 constituting a flocculate settling means 113 are disposed vertically in each of the first and second settling tanks 111a and 111b. Each of cells in the lattice of the electrically separating membrane 114 is formed in a side length in a range of about 1mm to 5 mm, so that electric current of 5 am to 30 am flows across each of the cells and high voltage of 10 kV to 60 kV, more preferably 20 kV was applied by a high-voltage pulse generator 115. The electrically separating membranes 114 are adapted to adsorb the electrically charged flocculates in the subject water flowing from below into the settling tanks 111a and 111b to prevent the upward passage of the flocculates, so that the flocculates are dropped down with the polarities of the electrodes switched over when the flocculates are discharged.

Permanent magnets 89 of neodymium or the like are laid on the bottom of each of the first and second settling tanks 111a and 111b, so that the forcibly settled and electrically charged flocculates are reliably attracted and discharged through the discharge pipe 93 into'the composting plant.

A diluting transporting pipe 116 is connected to the second settling tank 111b and communicates with the suspended solid removing tank 78, as shown in Fig.15, so that a portion of the subject water treated in the second embodiment flows into the suspended solid removing tank 78. The thus-treated water is called a so-called activated water with the water molecules being in electrically charged states. Therefore, this activated water has a nature that if it is incorporated into the raw water, it causes oxidizing/reducing reaction to decompose the dirt. In the second embodiment, the subject water resulting from the treatment in the second settling device 74b is introduced into the suspended solid removing tank 78, but the subject water immediately after being treated in the flocculating device 72 become water molecules charged with more electricity, so that the decomposition of the dirt by the oxidizing/reducing reaction can be promoted effectively. Therefore, for example, if water in a river treated in the flocculating device 72 is previously incorporated into the raw water and subjected to a primary treatment, it is possible to simplify and quickly the subsequent treatments to enhance the treating ability.

The thickening device 75 will be described below.

A thickening tank 75a is disposed in the thickening device 75 and connected to the each of the above-described tanks by the discharge pipes 93, as shown in Fig.15. The thickening tank 75a is adapted to recover the flocculates produced by the treatment in each of the tanks and to remove water from the flocculates to facilitate the composting treatment in the composting plant. A known means such as a dehydrator or the like may be used to remove the water from the flocculates.

The centralized control unit 76 will be described below.

The centralized control unit 76 includes a suspended solid removing device control section 117 for controlling the blowing of air in the suspended solid removing device 71 and the rotation of the blades, a flocculating device control section 118 for controlling the magnitude, the frequency and the like of the voltage applied by each of the AC high-voltage electrodes 86 and the DC high-voltage electrodes 92 in the flocculating device 72, a flocculation accelerating device control section 119 for controlling the magnitude and the like the voltage applied by each of the AC high-voltage electrodes 86 and the DC high-voltage electrodes 92 in the flocculating device 72, controlling the output of the microwave having a frequency in a range of 300 MHz to 16 GHz generated in the microwave separating means 96, controlling the output of the ultrasonic wave having a frequency in a range of 40kHz to 1, 200 kHz generated in the first ultrasonic wave flocculating means 99, controlling the output of the ultrasonic wave having a frequency in a range of 3 MHz to 300 MHz generated in the deodorizing means, controlling the output of the electromagnetic wave having a high frequency in a range of 100 MHz to 500 MHz generated in the completely separating means 102, the outputs of the ultrasonic waves having frequencies of 28 kHz, 40 kHz, 48 kHz and 100 kHz generated in the second ultrasonic wave flocculating means 108 and controlling the speed of circulation of the subject water, a first settling device control section 120 and a second settling device control section 121 for controlling the application, the switching-over and the like of the voltages of 1- to 60 kV in the first and second settling devices 74a and 74b, and a thickening device control section 122 for controlling the dehydration in the thickening device 75. Each of the control sections can be operated easily by corresponding one of switches (not shown) on a centralized control panel 123, and usually controlled automatically.

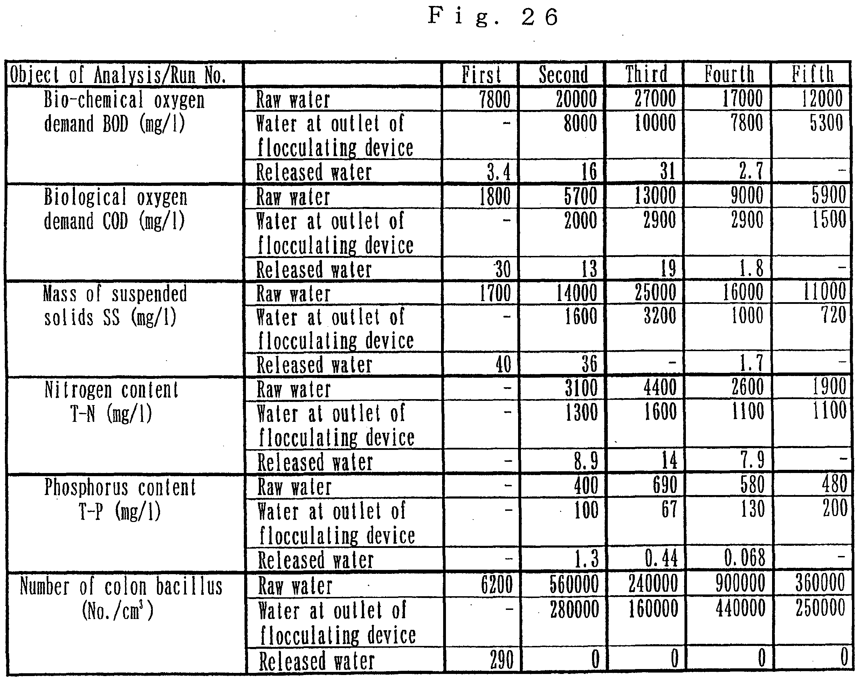

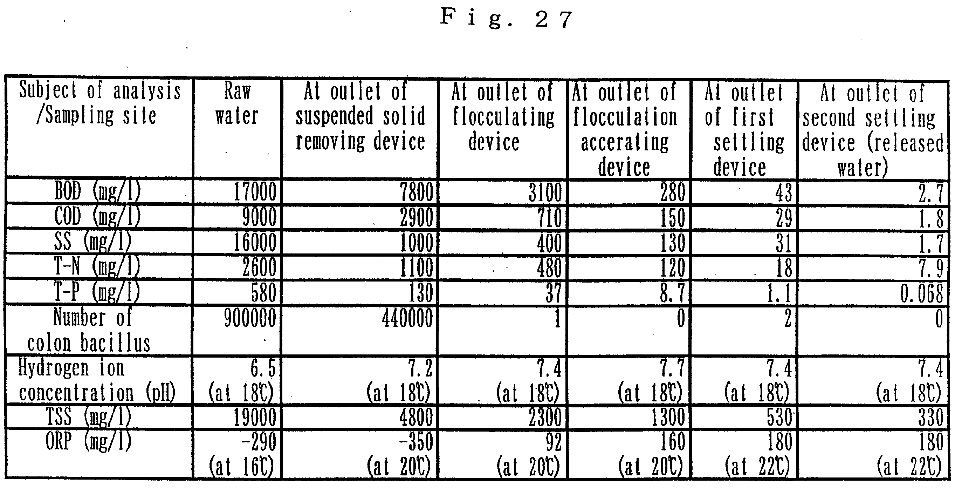

Results of a demonstrating test on the treatment of raw water using the second embodiment will be described below with reference to Figs. 26 and 27.

A drainage containing feces and urine of pig was used as a raw water and measured for the bio-chemical demand of oxygen BOD (mg/l), the chemical demand of oxygen COD (mg/l), the mass of suspended solids SS (mg/l), the nitrogen content T-N (mg/l), a phosphorus content T-N (mg/l), the number of colon bacillus (number/cm³), the hydrogen ion concentration (pH), the evaporation residue (TSS) and the oxidizing/reducing potential (ORP) at a sampling site, i.e., at a site before removal of the solid materials, at an outlet of the suspended solid removing device 71, at an outlet of the flocculating device 72, at an outlet of the flocculation accelerating device 73, at an outlet of the first settling device 74a and at an outlet of the second settling device 74b for discharging the water as a released water. The measurement was carried out five times on different days. The bio-chemical demand of oxygen (BOD), the chemical demand of oxygen (CODMn) and the mass of suspended solids (SS) were measured as an organic substance content.

The hydrogen ion concentration was measured by a glass electrode process; the bio-chemical demand of oxygen (BOD) was measured by a diaphragm electrode process; the chemical demand of oxygen (COD) was measured by a titrating process; the mass of suspended solids (SS) was measured by a filtration gravimetric process; and the number of colon bacillus was measured by a deoxycolate culture medium process. The nitrogen content was measured by a calcium peroxy disulfate decomposing process; the evaporation residue was measured by a sewage test process; and the oxidizing/reducing potential was measured by a sanitary test process.

The results of the synthesis carried out under the above-described conditions are shown in Figs.26 and 27.

### (1) Organic substance content

It was observed that BOD in the raw water was in a range of 7,800 to 27,000 mg/l; COD was in a range of 1,800 to 13,000 mg/l; and SS was in a range of 1,700 to 25,000 mg/l, but at the outlet of the suspended solid removing device 71 after the pre-treating step, BOD was in a range of 5,300 to 10,000 mg/l; COD was in a range of 1,500 to 2,900 mg/l; and SS was in a range of 720 to 3,200 mg/l. Thus, BOD was decreased by about 60 %; COD was decreased by about 80 %; and SS was decreased by about 90 %. Therefore, it can be seen that the pre-treatment was carried out effectively. However, the treated water provided in the electrically charged state after processing in the liquid treating system of the second embodiment was incorporated in the raw water and hence, it is necessary to take the effect provided by the treated water into consideration.

In the water from the outlet of the second settling device 74b, i.e., the released water, BOD was in a range of 2.7 to 31 mg/l; COD was in a range of 1.8 to 30 mg/l; and SS was in a range of 1.7 to 40 mg/l.

Consequently, the rate of decrease in BOD is 99.9 % at the maximum and 99.7 % at the minimum and thus, there is a tendency that when the concentration at the outlet of the suspended solid removing device 71 (at an inlet of the flocculating device 72) is lower, a higher rate of decrease in BOD is shown. The rate of decrease in COD is 99.9 % at the maximum and 98.3 % at the minimum. An interrelation between the concentration of the incoming water and the concentrate of the treated water is not observed from the data of COD. The rate of decrease in SS is 99.9 % at the maximum and 97.7 % at the minimum, and an interrelation between the concentration of the incoming water and the concentrate of the treated water is not observed from the data of SS, as in COD.

### (2) Nitrogen content

The nitrogen content in the raw water was in a range of 1,900 to 3,100 mg/l but at the outlet of the suspended solid removing device 71 after the pretreatment, the nitrogen content was in a range of 1,100 to 1,600 mg/l and thus, about of 42.1 to 63.6 % of nitrogen was removed. Therefore, it can be seen that the pretreatment was carried out effectively.

At the outlet of the second settling device 74b, the nitrogen content is in a range of 7.9 to 14 mg/l, and the rate of removal of nitrogen is about 99.7 %. Therefore, it can be seen that when the nitrogen content in the raw water is equal to or higher than 4,000 mg/l, the rate of removal is 99.7 %, and is little influenced by the frequency in service of the system and the variation in load.

### (3) Phosphorus content

In the raw water, the phosphorus content is in a range of 400 to 690 mg/l, but at the outlet of the suspended solid removing device 71, the phosphorus content is in a range of 97 to 200 mg/l and thus, about 58.3 to 85.9 % of the phosphorus was removed. However, it is difficult to consider that phosphorus is removed in the suspended solid removing device 71, and it is considered that there was an effect of dilution by the water resulting from the processing in the liquid treating system of the second embodiment.

At the outlet of the second settling device 74b after the processing of the water in the liquid treating system of the second embodiment, the phosphorus content was in a range of 0.068 to 1.3 mg/l and thus, the rate' of removal of phosphorus was at about 99.9 % at the maximum and 99.7 % at the minimum. Even with respect to the rate of removal of phosphorus, an interrelation between the concentration of the incoming water and the concentrate of the treated water was not observed.

### (4) Number of colon bacillus

In the raw water, the number of colon bacillus was in a range of 240,000 to 900,000/cm³, but the number of colon bacillus was in a range of 160,000 to 250,000/cm³ at the outlet of the suspended solid removing device 71, and reached 0/cm³ at the outlet of the second settling device 74b. Therefore, it was observed that approximately 100 % of the colon bacillus could be removed by the liquid treating system of the second embodiment, irrespective of the number of the colon bacillus in the raw water.

### (5) Results of analysis of other values

The hydrogen ion concentration in the raw water showed an acidic value of 6.5, but the released water resulting from the processing showed an alkaline value of 7.4. The oxidizing/reducing potential was -290 mV in the raw water, but the potential changed 180 mV in the released water. The evaporation residue (TSS) was 19,000 mg/l in the raw water, but was decreased to 330 mg/l in the released water. The odor was removed by 90 % or more at the time point when the water flowed from the suspended solid removing device 71 into the flocculating device 72. Solids risen to the water surface was deodorized into an almost odorless state by the high-voltage decomposing effect in the flocculating device 72 and then deodorized by 99 % by the flocculation accelerating device 73.

Therefore, according to the second embodiment of the present invention, it is possible to flocculate and sterilize the water-soluble organic substances and microorganisms contained in a raw water by the simple operation using the centralized control unit 76 to remove them rapidly and reliably, and to achieve the deodorization and decolorization by such treatment, and further to produce a stable water which is an activated water comprising extremely disintegrated water molecules. Therefore, the activated water can be released as it is, but also can be utilized as drinking water for an animal and as water supplied to a plant. If the activated water is used in such application, it can exhibit a remarkable effect for the growth of the animal and plant.

In addition, the equipment required for the treatment of the water can be reduced in scale or size, and the consumed electric power can be reduced, leading to reductions in initial cost and running cost.

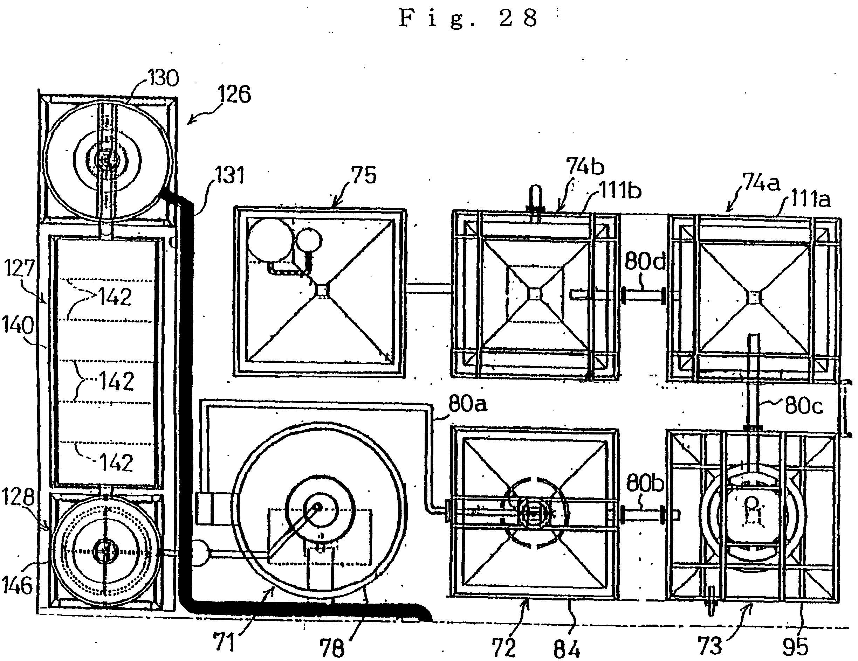

A third embodiment of a liquid treating system and liquid treating process according to the invention will now be explained with reference to Figs. 28 to 31.

The aspects of the construction of this third embodiment that are identical or equivalent to the embodiments described above are indicated by like reference numerals, and their explanation will therefore be omitted.

The third embodiment is **characterized by** adding a pretreating system 125 to the liquid treating system of the first embodiment or second embodiment. Specifically, the raw water, such as polluted water, which must be treated by the liquid treating system is of various types, and in the case of lightly polluted water, for example, it is not necessary to use a liquid treating system according to one of the aforementioned embodiments since an adequate purifying effect can often be achieved with a simple treatment apparatus; on the other hand, in the case of highly polluted water, direct treatment of the water in a liquid treating system according to one of the aforementioned embodiments creates a large burden and is inefficient.

Thus, the liquid treating system of the third embodiment is **characterized by** being provided with a pretreating system 125 that can be used alone as a liquid treating system, or that can pretreat highly polluted water before treatment by one of the aforementioned embodiments in order to treat the polluted water with even greater efficiency.

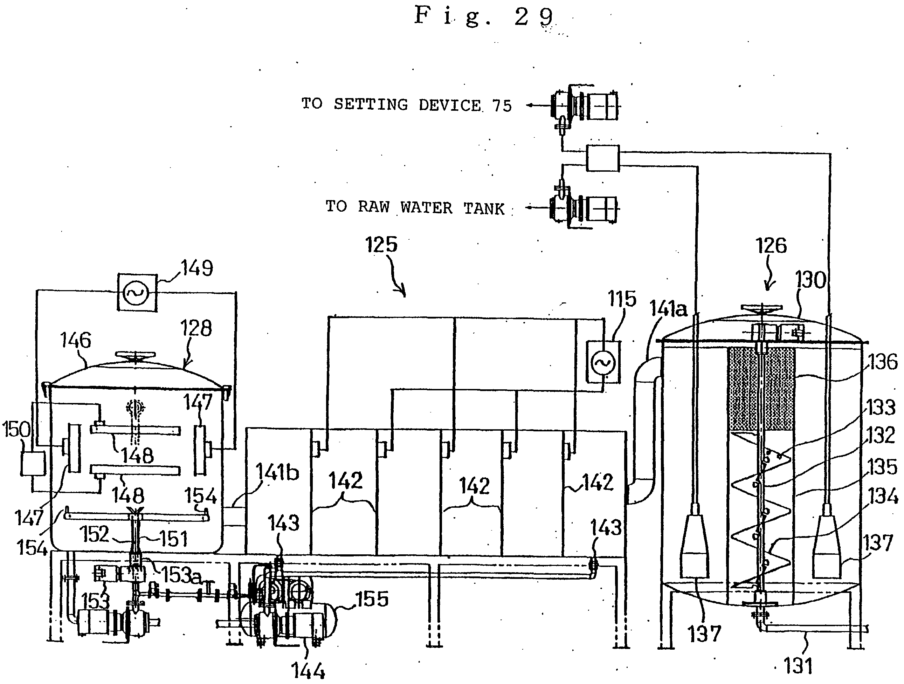

As shown in Fig. 28 and Fig. 29, the pretreating system 125 mainly comprises the first flocculating device 126 which mixes the treatment water in a magnetic field, an electrical charging rapid separation device 127 which electrically separates the flocculated particles from the water molecules, and an activated water-producing device 128 which activates the treatment water by high voltage application and high frequency electromagnetic wave emission.

The apparatuses composing the pretreating system 125 will now be explained in detail.

In the first flocculating device 126 there is provided a primary flocculating tank 130 into which the raw water flows. A primary raw water inflow pipe 131 is connected to the floor of the primary flocculating tank 130. A flocculating rotating shaft 132 is positioned at the center in the primary flocculating tank 130, running from the floor to the ceiling, and a rotating blade 134, in which a magnetic element 133 is embedded as the magnetic field mixing means, is mounted on the flocculating rotating shaft 132 from the floor to 2/3 of the height. Although it is believed that some effect is exhibited even with a small size of the magnetic force of the magnetic element 133, the third embodiment is set to about 3000 Gauss to 16,000 Gauss, and more preferably about 11,000 Gauss, from the standpoint of exhibiting an effect that will reliably flocculate the colloidal particles, and a neodymium element 133 is used as the magnetic element 133. The rotating blade 134 in which the neodymium element 133 is embedded has virtually the same construction as the neodymium element blade 32 explained for the aforementioned embodiments using Fig. 8. That is, the neodymium element 133 is alternately embedded in the order "NNSSNNSS..." in the direction of flow of the treatment water, along the widthwise edge of the rotating blade 134 composed of a helically twisted ceramic plate.

When the magnetic field is applied to the neodymium element 133 and mixing begins with the rotating blade 134, the water molecules and colloidal particles in the treatment water fragment due to the action of the magnetic field, electric field and mixing and are converted from a hydrophilic state to a hydrophobic state, each being surrounded by a charge. As a result, the water molecules become negatively charged and the colloidal particles become positively charged, and each separate and flocculate.

A cylindrical conduit 135 is formed around the flocculating rotating shaft 132 and rotating blade 134 in the primary flocculating tank 130, in order to ensure a route for the treatment water to pass through. In the section of the cylindrical conduit 135 about 2/3 above the floor, that is, in the section above the uppermost rotating blade 134, there is formed a mesh-like cylinder plate 136 of approximately 5 mm on one side, as one of the electrical separating means, and a DC voltage is applied thereto. The DC voltage may be set as desired, but from the viewpoint of effectively adsorbing the flocculated particles, a DC voltage of 55 V, 3 A is applied in this third embodiment. Application of the DC voltage to the mesh-like cylinder plate 136 causes electrical adsorption of the charged large-diameter flocculated particles.

A plurality of air lifters 137, 137 for suction of the flocculated particles precipitated on the floor are situated in the primary flocculating treatment tank. The flocculated particles drawn by the suction of the air lifters 137, 137 are conveyed to the aforementioned settling device 75 and returned to a raw water tank (not shown).

The electrical charging rapid separation device 127 will now be explained.

The electrical charging rapid separation device 127 has a closed-bottom rectangular cylindrical rapid separation tank 140 lying along the direction of the treatment water flow, and it is connected with the primary flocculating treatment device by a connecting pipe 141a. In the rapid separation tank 140 there are situated a plurality of mesh-like plates 142 with different mesh pore sizes, at a prescribed spacing in the direction perpendicular to the water flow.

The size and number of mesh pores of each of the mesh-like plates 142 may be set as desired depending on the degree of pollution of the treatment water, but for more efficient removal of the flocculated particles in this third embodiment, five different mesh-like plates 142 are prepared with each side formed to 5 mm, 4 mm, 3 mm, 2 mm and 1 mm, respectively, and they are situated in the order of large-pore mesh-like plates 142 to small-pore mesh-like plates 142, from the treatment water inflow end. Titanium alloy is used as the material for each of the mesh-like plates 142 because of its high strength and corrosion-inhibiting effect.

In order to form the electrical separation means, a high voltage pulse generator 115 is connected to the mesh-like plates 142, a high voltage current set as desired, for example, a 5 am to 30 am current and a 10 kV to 60 kV voltage, and preferably a 20 am current and a 10 kV voltage according to this third embodiment, is applied to each mesh. The mesh-like plates 142 electrically adsorb the charged flocculated particles in the first flocculating device 126 for their rapid separation from the water molecules.

When the flocculated particles adsorbed onto the mesh-like plates 142 are removed, the electrodes for the high voltage current applied to the mesh-like plates 142 are switched while the water flow is directed in the direction opposite to the direction of the treatment water flow, to release the flocculated particles from the mesh-like plates 142. The flocculated particles released in this manner settle to the floor of the rapid separation tank 140, and are therefore suctioned and discharged by a vacuum pump 144 or the like through a discharge port provided on the floor.

The activated water-producing device 128 will now be explained.

In the activated water-producing device 128 there is situated an activated water-producing tank 146 which is connected with the electrical charging rapid separation device 127 by the connecting pipe 141b and which stores the treatment water after it has undergone flocculated particle-removal treatment by the electrical charging rapid separation device 127. AC high voltage electrodes 147 serving as the AC high voltage application means, and electromagnetic wave emitters 148 serving as the high frequency electromagnetic wave emitting means, are situated inside the activated water-producing tank 146.

The AC high voltage electrodes 147 are situated with the anode and cathode opposing each other, and connected to the AC high voltage emitter 149. The AC high voltage emitter 149 is set to apply a prescribed voltage, for example, a voltage of approximately 10 kV to 30 kV and more preferably 20 kV, considering the range that can adequately exhibit an effect of charging and cell disruption for the third embodiment. The switching frequency of the AC voltage is approximately 600 kHz to 1800 kHz, and for the third embodiment it is 970 kHz.

The AC high voltage electrodes 147 are in a two-electrode system to simplify the construction, but it may also be a three-electrode system as explained for the second embodiment, if the major object is to prevent wear of the AC high voltage electrodes 147 and widen the treatment range for charging and cell disruption in the activated water-producing tank 146.

The AC high voltage electrodes 147 may be designed with only one set, but a plurality of sets are situated to allow appropriate treatment of different treatment water concentrations, water volumes and types.

When such an AC high voltage is applied to supply a constant charge energy to the treatment water, the ions in the treatment water move frequently and rapidly and the molecules in the treatment water are jolted at high speed, so that the heavy molecules disintegrate by the shock and are reconstituted as lighter molecules. Application of a charge during this process is thought to produce radicals. The radicals have the effect of, for example, decomposing the water-soluble organic matter and flocculating it.

Also, when living cells are present between the AC high voltage electrodes 147, the fact that their biological membranes have a resistance of over 1000 times higher than that of the solution inside and outside the cells makes them function as a type of condenser, and therefore application of a voltage exceeding the threshold value of the dynamic resistance of the biological membrane caused a phenomenon of instantaneous disintegration of the cells, which disrupts the cells.

The electromagnetic wave emitters 148 will now be explained.

The electromagnetic wave emitters 148 are situated alternately opposing each other at upper and lower locations of the activated water-producing tank 146, and they are connected to a high frequency electromagnetic wave generator 150 provided externally. The electromagnetic wave generator 150 is designed to emit an electromagnetic wave with a frequency of about 250 MHz to 300 MHz, and preferably 270 MHz, from the viewpoint of achieving an adequate effect of completely separating the water-soluble organic matter. A high frequency current is simultaneously applied for discharge. That is, the high frequency electromagnetic wave generates induction plasma by the high frequency electric field, and resonates optimally with the treatment water to accelerate adsorption of the water-soluble organic matter. This effect prevents the water-soluble organic matter from being redissolved in the water molecules, so that it is completely separated.

A hollow tubular air bubble-blowing support shaft 151 stands vertically on the floor of the activated water-producing tank 146, and an air bubble-blowing rotating shaft 152 is situated in the hollow section of the air bubble-blowing support shaft 151. The driving shaft 153a of a rotationally driven motor 153 is connected at the proximal end of the air bubble-blowing rotating shaft 152 and rotates the air bubble-blowing rotating shaft 152, while an air bubble-blowing nozzle 154 which blows air bubbles from the tip end thereof is mounted at the tip end of the air bubble-blowing rotating shaft 152. A compressor 155 is connected to the air bubble-blowing nozzle 154 via the air bubble-blowing rotating shaft 152, and it is designed to blow out air bubbles compressed to micro units. By thus blowing out micro unit air bubbles while the air bubble-blowing nozzle 154 is rotating, the treatment water in the activated water-producing tank is agitated to produce a uniform charged state.

Thus, by applying a high voltage while emitting a high frequency electromagnetic wave, the treatment water is fragmented into very small molecules while the charged state is maintained to perform the function as "activated water"; for example, admixture of the activated water directly with raw water produces an oxidation-reduction reaction that can produce an effect of gasifying BOD or COD, to disintegrate and flocculate pollution.

The treatment water activated by the pretreating system 125 is conveyed to the filtration treatment means in the case of the first embodiment and to the suspended matter removing device 71 shown in Fig. 28 in the case of the second embodiment, where the next purification treatment is carried out.

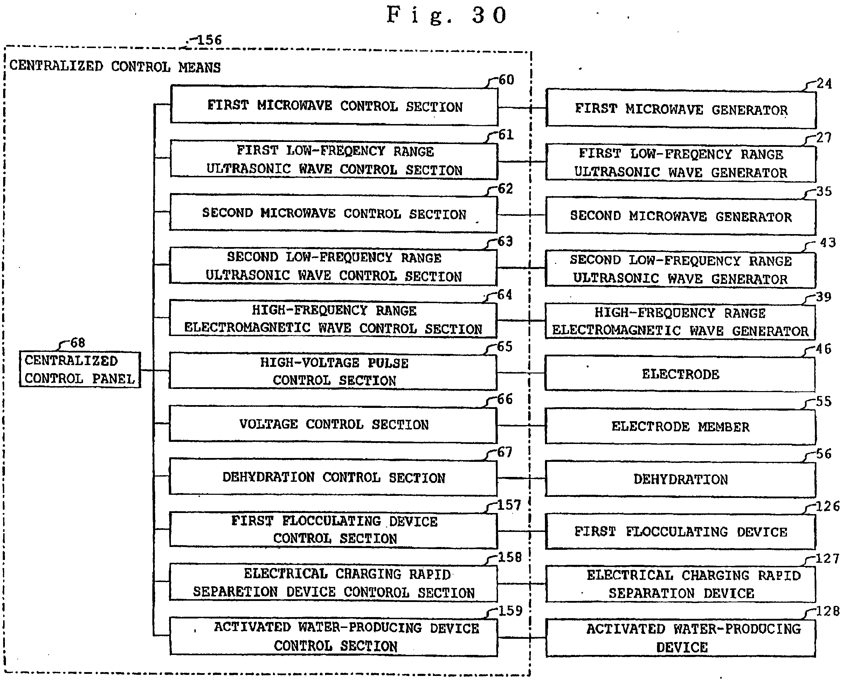

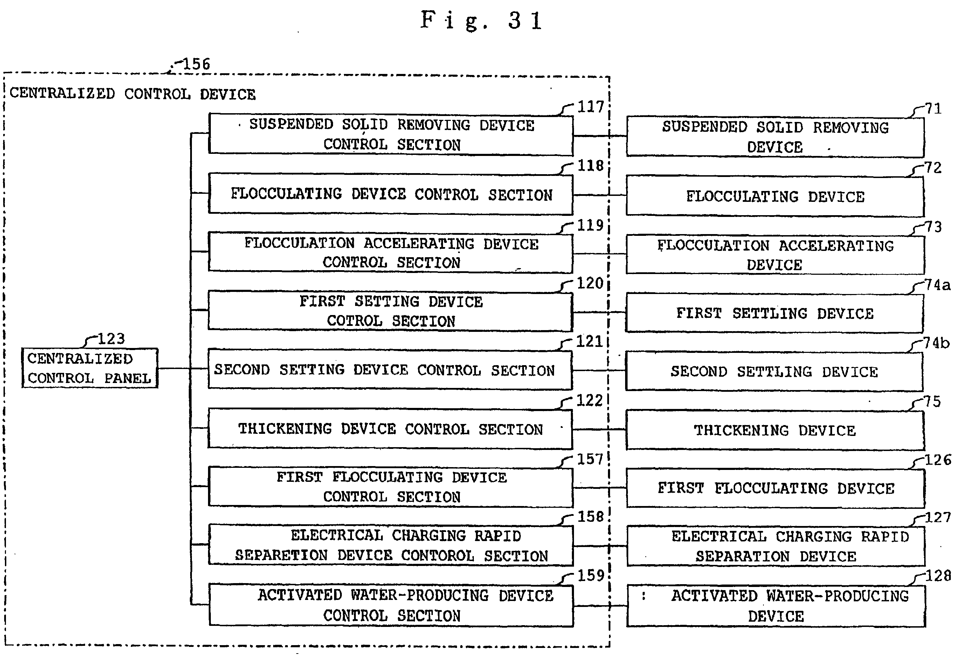

As shown in Fig. 30 and Fig. 31, the centralized control device 156 serving as the centralized control means in the third embodiment also houses, in addition to the construction of the centralized control devices 13, 76 of the first embodiment or second embodiment, a first flocculating device control section 157 which controls the rotational driving of the rotating blade 134, the suction of the air lifters 137, 137 and the voltage of the mesh-like cylindrical plate 136; an electrical charging rapid separation device control section 158 which controls the AC voltage applied to the mesh-like plate 142; and an activated water-producing device control section 159 which controls the AC voltage of the AC high voltage electrodes 147, the electromagnetic wave of the electromagnetic wave emitters 148 and the blowing of air bubbles of the air bubble-blowing nozzle 154, in order to control the treatment system 125. This centralized control device 156 allows optional control of the driving and shutdown of the treatment system 125 according to the degree of pollution of the raw water.

A liquid treating process with the treatment system 125 of the third embodiment will now be explained.

The liquid treating process with the treatment system 125 of the third embodiment accomplishes mixing of raw water containing colloidal particles with the rotating blade 134 or the like in a magnetic field of about 3000 Gauss to 16, 000 Gauss, and more preferably about 11,000 Gauss, as the first stage. This fragments the water molecules in the raw water and negatively charges them, while also fragmenting the colloidal particles and positively charging them, for their respective separation and flocculation.

Next, as the second stage, a 5 am to 30 am current and a 10 kV to 60 kV voltage, and preferably a 20 am current and a 10 kV high voltage is applied to the flocculated particles that have been flocculated by charging due to the effect of mixing in the magnetic field. This electrically adsorbs the charged flocculated particles to rapidly separate them from the water molecules.

Next, as the third stage, an AC voltage of approximately 10 kV to 30 kV and more preferably 20 kV, is applied to the treatment water from which the flocculated particles have been removed, while switching at a frequency of approximately 600 kHz to 1800 kHz, and more preferably 970 kHz. This disrupts the residual water-soluble organic matter and microorganic cells in the treatment water, destroying colon bacillus and the like, while also charging the colloidal particles and water molecules to further accelerate flocculation of the colloidal particles.

As the fourth stage, an electromagnetic wave with a frequency of about 250 MHz to 300 MHz, and preferably 270 MHz, is emitted to the treatment water. The electromagnetic wave in this high frequency range generates induction plasma, causes optimal resonation with the treatment water to promote adsorption of the water-soluble organic matter, completely separates the water-soluble organic matter and water molecules, and prevents them from being redissolved.

Either the third stage or fourth stage may be carried out first to still exhibit the effect of this embodiment.

Consequently, according to the liquid treatment system and liquid treating process of this third embodiment, the treatment system 125 purifies the raw water as a preliminary step in addition to the effects of the first embodiment and second embodiment, and therefore even in cases of very highly polluted water, the burden on the treating devices is alleviated to allow more reliable purification treatment.

Even if the treatment system 125 is used alone, approximately 80% of the water-soluble organic matter including COD and BOD can be removed, so that a satisfactory purification effect can be exhibited if the water is only lightly polluted.

Although the embodiments of the present invention have been described in detail, it will be understood that the present invention is not limited to the above-described embodiments, and various modifications in design may be made without departing from the spirit and scope of the invention defined in claims.

For example, the separating/flocculating means for the subject water in the first embodiment of the present invention is divided into the first separating means 2 and the first flocculating means 3, and the second separating means 5 and the second flocculating means 7, whereby two runs of the separating and flocculating treatment are carried out. However, when a water to be treated and having a low concentration of organic substances is to be purified, the first separating means 2 and the first flocculating means 3 and the second separating means 5 and the second flocculating means 7 may be brought together into a single unit to carry out one run of the separating and flocculating treatment. On the other hand, when a water to be treated and having a high concentration of organic substances is to be purified, the number of division of the separating/flocculating means may be increased.

The AC and DC high-voltage electrodes 86 and 92 in the flocculating device 72 and the flocculation accelerating device 73 in the second embodiment of the present invention are disposed in the single tank, respectively, but may be disposed in separate tanks.

Further, the first and second embodiments of the present invention have been described with respect to the treating means constituting the water treating system. However, the treating means have been used as the water treating system, but may be used as individual treating devices. Even if each of the treating means is used as an individual device, an effect can be exhibited in each of the treatments.

As explained above, the liquid treating process and liquid treatment system of the present invention can be utilized for treatment of feces and urine at livestock farms, for treatment of industrial water at food processing and mechanical working factories, and for sewage treatment at sewage treatment plants.

## Claims

1. A liquid treating process comprises mixing a liquid containing colloidal particles of water-soluble organic matter, microorganisms and the like in a magnetic field, passing the mixed liquid through a mesh-like material to which a voltage has been applied, and then applying an AC high voltage to the liquid while emitting a high-frequency electromagnetic wave.

2. A liquid treating process comprises emitting an electromagnetic microwave to the liquid after it has been treated by the liquid treating process in Claim 1, and further emitting a low frequency ultrasonic wave while emitting a high-frequency electromagnetic ultrasonic wave.

3. A liquid treating system comprises magnetic mixing means by which a liquid containing colloidal particles is mixed in a magnetic field, electrical separating means by which the liquid containing the flocculated colloidal particles is passed through a mesh-like material to which a voltage has been applied and the flocculated particles are electrically adsorbed onto it to separate them from the liquid molecules, AC high voltage applying means by which an AC high voltage is applied to the liquid, and high-frequency electromagnetic wave emitting means by which a high-frequency electromagnetic wave is emitted to the liquid.

4. A liquid treating system comprises the liquid treating system in Claim 3 as a pretreating system while also comprising separating treatment means by which an electromagnetic microwave is emitted to the liquid treated by the pretreating system to separate the colloidal particles and the liquid molecules, flocculating treatment means by which a low frequency ultrasonic wave is emitted to the liquid after separation of the colloidal particles to flocculate the colloidal particles, and deodorizing treatment means by which a high-frequency electromagnetic ultrasonic wave is emitted to the liquid to deodorize the liquid.

5. A liquid treating system according to Claim 4 comprises high-voltage pulse treatment means by which a high-voltage pulse is applied to the pretreated liquid to separate and remove nitrogen from the liquid while generating ozone for decoloration and sterilization of the liquid, and flocculated particle discharging treatment means by which the flocculated colloidal particles are adsorbed by magnetic force and discharged.

6. A liquid treating system comprises a primary flocculating device provided with magnetic mixing means by which a liquid containing colloidal particles is mixed in a magnetic field to fragment the liquid molecules and colloidal particles and shower them with a charge while flocculating the colloidal particles together; an electrical charging rapid separation device provided with electrical separating means by which the liquid containing the flocculated colloidal particles is passed through a mesh-like material to which a voltage has been applied and the flocculated particles are electrically adsorbed onto it to separate them from the liquid molecules; an activated water-producing device provided with AC high voltage applying means by which an AC high voltage is applied to the liquid to electrically charge the liquid and with high-frequency electromagnetic wave emitting means by which an electromagnetic wave of 250 MHz to 300 MHz is emitted to the liquid so that induction plasma is emitted by the high-frequency electric field to completely separate the colloidal particles from the liquid molecules; a flocculating device having electrically charging means/cell disrupting treatment means provided with AC high voltage electrodes by which a high-frequency, high-voltage pulse is applied to separate and flocculate the colloidal particles from the liquid while disrupting the cells; a flocculation accelerating device provided with microwave separating treatment means by which an electromagnetic microwave is emitted to the liquid to separate the colloidal particles and the liquid molecules, first ultrasonic wave flocculating treatment means by which an ultrasonic wave with a frequency of 40 kHz to 1200 kHz is emitted to the liquid after emission of the microwave, to flocculate the colloidal particles, and deodorizing treatment means by which a high-frequency electromagnetic ultrasonic wave is emitted to the liquid; and a settling device provided with flocculated particle settling treatment means by which the liquid containing the flocculated colloidal particles is passed through a lattice-shaped electrical separating membrane to which a high voltage has been applied to adsorb the flocculated particles onto the electrical separating membrane, while the direction of high voltage application is switched to settle the flocculated particles.
